(19) Europäisches Patentamt
European Patent Office
Office européen des brevets

(11) Veröffentlichungsnummer: **0 412 388 B1**

(12) **EUROPÄISCHE PATENTSCHRIFT**

(45) Veröffentlichungstag der Patentschrift: **04.10.95**

(51) Int. Cl.6: **C08F 2/32**, C02F 1/50

(21) Anmeldenummer: **90114573.0**

(22) Anmeldetag: **30.07.90**

(54) **Verfahren zur Herstellung von feinteiligen Polymerisatpulvern.**

(30) Priorität: **08.08.89 DE 3926120**

(43) Veröffentlichungstag der Anmeldung:
**13.02.91 Patentblatt 91/07**

(45) Bekanntmachung des Hinweises auf die Patenterteilung:
**04.10.95 Patentblatt 95/40**

(84) Benannte Vertragsstaaten:
**AT CH DE ES FR GB IT LI**

(56) Entgegenhaltungen:
**DE-A- 3 312 424**
**GB-A- 1 000 307**
**GB-A- 1 319 632**
**US-A- 4 078 133**

(73) Patentinhaber: **BASF Aktiengesellschaft**
**Carl-Bosch-Strasse 38**
**D-67063 Ludwigshafen (DE)**

(72) Erfinder: **Niessner, Manfred, Dr., Dipl.-Chem.**
**Gotenstrasse 25**
**W-6707 Schifferstadt (DE)**
Erfinder: **Grund, Norbert, Dr., Dipl.-Chem.**
**Merziger Strasse 7B**
**D-6700 Ludwigshafen (DE)**
Erfinder: **Heide, Wilfried, Dr., Dipl.-Chem.**
**Am Wurmberg 16**
**D-6713 Freinsheim (DE)**
Erfinder: **Hartmann, Heinrich, Dr., Dipl.-Chem.**
**Weinheimer Strasse 46**
**D-6703 Limburgerhof (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Nach dem Verfahren der umgekehrten Suspensionspolymerisation gemäß der US-PS 2 982 749 sind perlförmige, wasserlösliche Polymerisate dadurch erhältlich, daß man eine wäßrige Lösung von Monomeren in einer hydrophoben Flüssigkeit unter Verwendung von Wasser-in-Öl-Suspensionsmitteln suspendiert und die Monomeren darin in Gegenwart eines Polymerisationsinitiators polymerisiert. Die dabei entstehenden Polymerisatkügelchen werden abgetrennt und getrocknet. Aufgrund der Teilchengröße von etwa 100 bis 500 µm bereitet die Isolierung der Polymerkügelchen keine Schwierigkeiten.

Aus der US-PS 3 284 393 ist ein Verfahren zur Herstellung von Wasser-in-Öl-Emulsionspolymerisaten bekannt, bei dem man die wasserlöslichen Monomeren in Gegenwart von Wasser-in-Öl-Emulgatoren unter Einwirkung hoher Scherkräfte in einer inerten hydrophoben Flüssigkeit emulgiert und dann darin in Gegenwart von Radikale bildenden Polymerisationsinitiatoren polymerisiert. Die durchschnittliche Teilchengröße der Polymerisate beträgt beispielsweise 0,1 µm. Die Polymerisate können aus solchen Wasser-in-Öl-Polymeremulsionen nicht durch Filtrieren oder Zentrifugieren isoliert werden. Um sie in reiner Form zu gewinnen, ist es vielmehr erforderlich, die Polymerisate aus der Emulsion zu flocken und danach zu filtrieren. Dieses Verfahren kommt für eine technische Nutzung nicht in Betracht, weil wegen des Einsatzes größerer Mengen an Fällungsmitteln eine aufwendige Reinigung der Ölphase erforderlich ist. Wasser-in-Öl-Emulsionen wasserlöslicher Polymerisate wurden daher gemäß der Lehre der US-PS 3 642 019 direkt verwendet, indem man die Wasser-in-Polymeremulsion in Gegenwart eines Netzmittels in einem wäßrigen Medium invertiert, wobei das Polymerisat rasch in Lösung geht. Nachteilig ist hierbei, daß die Ölphase der Wasser-in-Öl-Polymeremulsion dabei verloren geht.

Aus der US-PS 4 059 552 sind vernetzte, feinteilige Polymerisate bekannt, deren Teilchendurchmesser weniger als 4 µm beträgt. Diese Polymerisate werden aus wasserlöslichen, ethylenisch ungesättigten Monomeren in Gegenwart von Vernetzern nach dem Verfahren der Wasser-in-Öl-Emulsionspolymerisation oder nach dem Verfahren der umgekehrten Suspensionspolymerisation hergestellt. Bei beiden Verfahren wird zur Einstellung der gewünschten geringen Teilchengröße der Polymerisate eine spezielle Emulgiervorrichtung benötigt. Die feinteiligen Wasser-in-Öl-Polymeremulsionen werden einer azeotropen Destillation unterworfen, um daraus Wasser abzudestillieren. Die Polymerisate werden dadurch erhalten, daß man zu der azeotrop entwässerten Polymersuspension ein Flockungsmittel zusetzt und die Polymerteilchen danach abfiltriert. Wie bereits oben ausgeführt, ist die Verwendung eines Flockungsmittels technisch aufwendig.

Aus der DE-OS 24 19 764 ist die azeotrope Entwässerung von Wasser-in-Öl-Polymeremulsionen zu nichtwäßrigen Polymerdispersionen bekannt. Die mittlere Teilchengröße der Polymerisate beträgt 0,01 bis 1 µm. Diese feinteiligen Dispersionen zeichnen sich durch eine hohe Lagerstabilität aus. Die Polymerisate können daraus nicht durch Filtrieren, Dekantieren oder Zentrifugieren gewonnen werden.

Aus der DE-OS 25 57 324 ist ein Verfahren zur Herstellung von sedimentationsstabilen Wasser-in-Öl-Dispersionen von Acrylamidpolymerisaten bekannt. Man verwendet hierfür Netzmittel mit einem HLB-Wert oberhalb von 10 und spezielle Wasser-in-Öl-Emulgatoren. Die in den Emulsionen enthaltenen Polymerisate können nicht abfiltriert oder abzentrifugiert werden.

Nach dem Verfahren der DE-OS 36 41 700 erhält man Wasser-in-Öl-Emulsionen vernetzter, wasserquellbarer Polymerisate durch Copolymerisieren von wasserlöslichen ethylenisch ungesättigten Monomeren mit 100 bis 5000 ppm, bezogen auf die Monomermischung, eines mindestens bifunktionellen Vernetzers in der wäßrigen Phase einer Wasser-in-Öl-Emulsion in Gegenwart eines Wasser-in-Öl-Emulgators und eines Emulgators mit einer HLB-Wert von mindestens 10 unter Verwendung von wasserlöslichen Polymerisationsinitiatoren. Aus solchen Dispersionen kann das Polymerisat nicht durch einfaches Filtrieren, Dekantieren oder Zentrifugieren gewonnen werden.

Aus der GB-A-1 319 632 ist ein Verfahren zur Herstellung Polymerisatpulvern bekannt, bei dem man wasserlösliche Monomere wie Acrylamid oder Acrylsäure, in der wäßrigen Phase einer Wasser-in-Öl-Emulsion in Gegenwart von Suspensionsmitteln wie Ethylcellulose oder Polyvinylacetat und wasserlöslicher Emulgatoren, wie Anlagerungsprodukten von Ethylenoxid an Alkohole, Amine, Amide, Fettsäuren oder Phenole in Gegenwart von Initiatoren polymerisiert und die Polymerisate anschließend azeotrop trocknet. Das feinteilige Polymer wird abfiltriert. Die Polymerteilchen haben gemäß den Angaben in den Beispielen 3 und 4 einen Durchmesser von 1 bzw. 5 mm.

Aus der US-A-4 078 133 ist ein Verfahren zur Herstellung von Polymerisatpulvern aus Wasser-in-Öl-Polymeremulsionen durch Verdampfen der Lösemittel bekannt. Bei diesen Verfahren wird zunächst eine wäßrige Monomerlösung in einer Ölphase mit Hilfe einer Emulgatormischung aus Sorbitanmonostearat und dem Additionsprodukt von Ethylenoxid an Stearylalkohol emulgiert und anschließend polymerisiert. Man erhält dabei eine feinteilige Wasser-in-Öl-Polymeremulsion, die zur Trockne eingedampft wird. Der Rückstand muß mehrfach mit Aceton gewaschen werden. Dieses Verfahren ist technisch umständlich.

Der Erfindung liegt die Aufgabe zugrunde, ein Verfahren zur Gewinnung von feinteiligen Polymerisatpulvern aus Wasser-in-Öl-Polymeremulsionen zur Verfügung zu stellen, das technisch einfacher durchzuführen ist als die bisher bekannten Verfahren.

Die Aufgabe wird erfindungsgemäß gelöst mit einem Verfahren zur Herstellung von feinteiligen Polymerisatpulvern durch Polymerisieren von wasserlöslichen Polymeren in der wäßrigen Phase einer Wasser-in-Öl-Emulsionin Gegenwart von Wasser-in-Öl-Emulgatoren und von Radikale bildenden Polymerisationsinitiatoren und Isolieren der Polymerisate, wenn man die Polymerisation der wasserlöslichen Monomeren in Gegenwart von 0,1 bis 10 Gew.-%, bezogen auf die bei der Polymerisation eingesetzten Monomeren, an Schutzkolloiden durchführt oder die Schutzkolloide nach Beendigung der Polymerisation der Wasser-in-Polymeremulsion in Mengen von 0,1 bis 10 Gew.-%, bezogen auf Polymer, zusetzt, wobei die Wasser-in-Öl-Emulgatoren einer anderen Verbindungsklasse angehören als die Schutzkolloide, die entstandene Wasser-in-Öl-Polymersuspension azeotrop entwässert und die suspendierten feinteiligen Polymerisatpulver isoliert.

In einer bevorzugten Ausführungsform erfolgt die Polymerisation der wasserlöslichen Monomeren zusätzlich in Gegenwart von 1 bis 20 Gew.-%, bezogen auf die bei der Polymerisation eingesetzten Monomeren, mindestens eines Öl-in-Wasser-Emulgators.

Bei der Polymerisation können sämtliche wasserlöslichen ethylenisch ungesättigten Monomeren eingesetzt werden. Bei diesen Monomeren handelt es sich beispielsweise um ethylenisch ungesättigte $C_3$- bis $C_6$-Carbonsäuren, wie Acrylsäure, Methacrylsäure, Itaconsäure, Maleinsäure, Fumarsäure und Methacrylsäure sowie um die Amide dieser Carbonsäuren, insbesondere Acrylamid und Methacrylamid. Weitere geeignete wasserlösliche Monomere sind beispielsweise Acrylamidomethylpropansulfonsäure, Vinylsulfonsäure, Vinylphosphonsäure und Vinylmilchsäure.

Weitere geeignete wasserlösliche ethylenisch ungesättigte Monomere sind Di-$C_1$- bis $C_3$-Alkylamino-$C_2$- bis $C_6$-Alkyl(meth)acrylate, wie Dimethylaminoethylacrylat, Dimethylaminoethylmethacrylat, Diethylaminoethylacrylat, Diethylaminoethylmethacrylat, Dimethylaminopropylacrylat, Dimethylaminobutylacrylat, Dimethylaminoneopentylacrylat und Dimethylaminoneopentylmethacrylat. Die basischen Acrylate können in Form der Salze mit anorganischen Säuren oder Carbonsäuren mit 1 bis 4 Kohlenstoffatomen oder auch in quaternisierter Form der Polymerisation unterworfen werden. Geeignet sind auch olefinisch ungesättigte Nitrile, wie Acrylnitril.

Außerdem eignen sich wasserlösliche Diallylammoniumverbindungen der allgemeinen Formeln

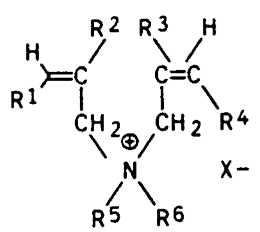

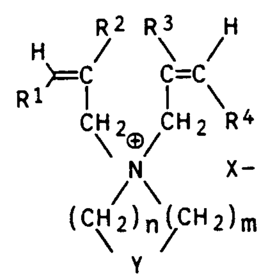

in der $X^-$ für ein Halogenidion, wie Chlorid-, Fluorid-, Bromid- und Iodid- oder ein Hydroxid-, Nitrat-, Methosulfat-, Hydrogensulfat- oder Dihydrogenphosphation steht, n und m ganze Zahlen von 1 bis 2, vorzugsweise n = m = 2,

Y = $>$N-Methyl, $>$N-Ethyl, vorzugsweise ein Sauerstoffatom oder eine $>CH_2$-Gruppe, und

$R^1$, $R^2$, $R^3$ und $R^4$ jeweils ein Wasserstoff oder einen Alkylrest mit 1 bis 6 Kohlenstoffatomen und $R^5$ und $R^6$ H oder einen Alkylrest, der geradkettig oder verzweigtkettig sein kann, mit 1 bis 18 Kohlenstoffatomen, vorzugsweise 1 bis 6 Kohlenstoffatomen oder einen Aryl- und/oder Benzylrest bedeuten.

Derartige diolefinisch ungesättigte Monomere sind z.B. Dimethyldiallylammoniumchlorid, Dimethyldiallylammoniumbromid, Diethyldiallylammoniumchlorid, Methyl-tert.-butyldiallylammoniummethosulfat, Methyl-n-propyldiallylammoniumchlorid, Dimethyldiallylammoniumhydrogensulfat, Dimethyldiallylammoniumdihydrogenphosphat, Di-n-butyl-diallylammoniumbromid, Diallylpiperidiniumbromid, Diallylpyrrolidiniumchlorid und Diallylmorpholiniumbromid.

Geeignet sind auch N-Vinylpyrrolidone, wie N-Vinylpyrrolidon. Als wasserlösliches Monomer kommt auch N-Vinylformamid in Betracht. Es wird entweder allein oder in Mischung mit anderen ethylenisch ungesättigten Monomeren copolymerisiert, z.B. mit N-Vinylpyrrolidon, Acrylamid, Methacrylamid, Vinylacetat, N-Vinylimidazol, N-Vinylimidazolin und/oder Dimethylaminoethylacrylat.

Außerdem kommen als wasserlösliche Monomere N-Vinylimidazolium-Verbindungen in Betracht, die beispielsweise mit Hilfe folgender Formel charakterisiert werden können:

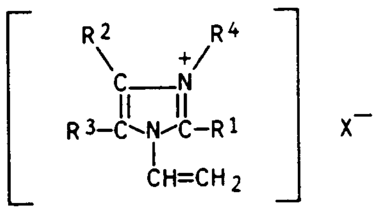

in der $R^1$, $R^2$ und $R^3$ = H, $CH_3$ und $R^1$ außerdem noch $C_2H_5$, $C_3H_7$ und $C_4H_9$ und $R^4$ = H, $C_1$- bis $C_6$-Alkyl-, Benzyl- und

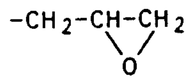

und $X^-$ ein Anion, wie $Cl^-$, $Br^-$, $J^-$, Methosulfat, Ethosulfat, Acetat, Sulfat, Hydrogensulfat und Dihydrogenphosphat sein kann. Vorzugsweise verwendet man aus dieser Verbindungsklasse das unsubstituierte N-Vinylimidazol in Salzform. Weitere geeignete wasserlösliche Monomere sind N-Vinylimidazoline, die beispielsweise mit Hilfe folgender allgemeiner Formel charakterisiert werden können:

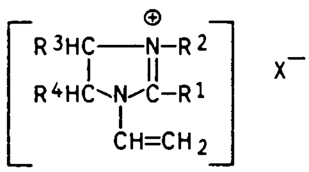 (I),

in der
$R^1$ = H, $C_1$- bis $C_{18}$-Alkyl,

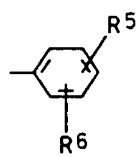

$R^5$, $R^6$ = H, $C_1$- bis $C_4$-Alkyl, Cl,
$R^2$ = H, $C_1$- bis $C_{18}$-Alkyl,

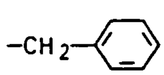 , 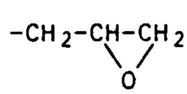

$R^3$, $R^4$ = H, $C_1$- bis $C_4$-Alkyl, und
$X^-$ ein Säurerest bedeutet.

Vorzugsweise setzt man bei der Polymerisation aus dieser Gruppe von Verbindungen 1-Vinyl-2-imidazolin-Salze der Formel II ein

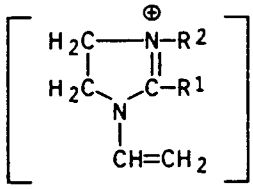 $X^-$ (II),

in der
$R^1$ = H, $CH_3$, $C_2H_5$, n- und i-$C_3H_7$, $C_6H_5$ und
$X^-$ ein Säurerest ist. $X^-$ steht vorzugsweise für $Cl^-$, $Br^-$, $SO_4^{2-}$, $HSO_4^{\ominus}$, $H_2PO_4^{\ominus}$, $CH_3O\text{-}SO_3^-$, $C_2H_5\text{-}O\text{-}SO_3^-$, $R^1\text{-}COO^-$ und $R^2$ = H, $C_1$- bis $C_4$-Alkyl und Aryl.

Der Substituent $X^-$ in den Formeln I und II kann prinzipiell jeder beliebige Säurerest einer anorganischen oder einer organischen Säure sein. Die Monomeren der Formel I werden erhalten, indem man die freie Base, d.h. 1-Vinyl-2-imidazoline, mit der äquivalenten Menge einer Säure neutralisiert. Die Vinylimidazoline können auch beispielsweise mit Trichloressigsäure, Benzolsulfonsäure oder Toluolsulfonsäure neutralisiert werden. Außer Salzen von 1-Vinyl-2-imidazolinen kommen auch quaternisierte 1-Vinyl-2-imidazoline in Betracht. Sie werden hergestellt, indem man 1-Vinyl-2-imidazoline, die gegebenenfalls in 2-, 4- und 5-Stellung substituiert sein können, mit bekannten Quaternisierungsmitteln umsetzt. Als Quaternisierungsmittel kommen beispielsweise $C_1$- bis $C_{18}$-Alkylchloride oder -bromide, Benzylchlorid, Benzylbromid, Epichlorhydrin, Dimethylsulfat und Diethylsulfat in Betracht. Als Quaternisierungsmittel verwendet man vorzugsweise Epichlorhydrin, Benzylchlorid, Dimethylsulfat und Methylchlorid.

Vorzugsweise kommen als wasserlösliche ethylenisch ungesättigte Monomere Diallyldimethylammoniumchlorid, Acrylsäure, Methacrylsäure, 2-Acrylamido-2-methylpropansulfonsäure, N-Vinylpyrrolidon, Acrylamid und Methacrylamid in Betracht. Die Monomeren können entweder allein zu Homopolymerisaten oder auch in Mischung miteinander zu Copolymerisaten polymerisiert werden. Von besonderem Interesse sind beispielsweise Copolymerisate aus Acrylamid und Acrylsäure, Copolymerisate aus Acrylamid und Methacrylsäure, Copolymerisate aus Methacrylamid und Acrylsäure, Copolymerisate aus Methacrylamid und Methacrylsäure, Copolymerisate aus Acrylamid, Acrylsäure und Acrylamido-2-methylpropansulfonsäure, Copolymerisate aus Acrylamid und Dimethylaminoethylacrylat, Copolymerisate aus Acrylamid und Diethylaminoethylmethacrylat und Copolymerisate aus Methacrylamid und Dimethylaminoethylacrylat. Die Carbonsäuren und anderen ethylenisch ungesättigten Säuren, wie Vinylsulfonsäure und Acrylamidomethylpropansulfonsäure, können entweder in Form der freien Säure, in partiell neutralisierter oder auch in vollständig neutralisierter Form bei der Polymerisation eingesetzt werden. Als Basen zur Neutralisation dieser Monomeren verwendet man beispielsweise Natronlauge, Kalilauge, Ammoniak, Amine, wie Triethylamin, Butylamin, Triethylamin, Morpholin und Ethanolamin.

Die basischen Acrylate und Methacrylate werden vorzugsweise als Salz oder in quaternisierter Form bei der Homo- oder Copolymerisation eingesetzt. Die Neutralisation der basischen Acrylate und -methacrylate erfolgt beispielsweise mit Hilfe von Salzsäure, Bromwasserstoffsäure, Schwefelsäure, Phosphorsäure und Carbonsäuren, wie Ameisensäure, Essigsäure und Propionsäure. Außerdem werden die basischen Acrylate und -methacrylate in quaternisierter Form eingesetzt. Die Quaternisierungsprodukte werden erhalten, indem man diese Verbindungen mit üblichen Quaternisierungsmitteln, wie Methylchlorid, Ethylchlorid, Benzylchlorid, Laurylchlorid, Dimethylsulfat, Diethylsulfat oder Epichlorhydrin quaternisiert.

Die Polymerisation der wasserlöslichen Monomeren kann auch in Gegenwart von Vernetzern vorgenommen werden. Die Vernetzer enthalten mindestens zwei nicht konjugierte, ethylenisch ungesättigte Doppelbindungen. Geeignete Vernetzer sind beispielsweise N,N'-Methylen-bisacrylamid, Polyethylenglykoldiacrylate und Polyethylenglykoldimethacrylate, die sich jeweils von Polyethylenglykolen eines Molekulargewichts von 126 bis 8.500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylen-bisacrylamid, Polyethylenglykoldiacrylate, Polyethylenglykoldimethacrylate, Pentaerythrittriallylether und/oder Divinylharnstoff. Die Vernetzer werden in einer Menge von 50 bis 5000 ppm entsprechend etwa 0,003 bis 0,3 Mol.%, bezogen auf die bei der Polymerisation eingesetzten Monomeren, verwendet.

Um die Monomeren zu polymerisieren, löst man sie zunächst in Wasser. Die Konzentration der Monomeren in der wäßrigen Lösung beträgt 20 bis 80, vorzugsweise 30 bis 60 Gew.-%. Die wäßrige Lösung wird dann unter Bildung einer Wasser-in-Öl-Emulsion in einer inerten hydrophoben Flüssigkeit (Ölphase) in Gegenwart mindestens eines Wasser-in-Öl-Emulgators emulgiert. Als inerte hydrophobe Flüssigkeiten können praktisch alle mit Wasser nicht mischbaren Flüssigkeiten verwendet werden, die nicht in die Polymerisation eingreifen. Vorzugsweise verwendet man hierfür aliphatische und aromatische Kohlenwasserstoffe oder Mischungen aus aliphatischen und aromatischen Kohlenwasserstoffen. Geeignete aliphatische Kohlenwasserstoffe sind beispielsweise Pentan, Hexan, Heptan, Octan, Nonan, Decan, Cyclohexan, Decalin, Methylcyclohexan, Isooctan und Ethylcyclohexan. Aromatische Kohlenwasserstoffe, die als hydrophobe Flüssigkeit bei der umgekehrten Suspensionspolymerisation verwendet werden, sind beispielsweise Benzol, Toluol, Xylol und Isopropylbenzol. Daneben ist es selbstverständlich auch möglich, halogenierte Kohlenwasserstoffe, wie Tetrachlorethan, Hexachlorethan, Trichlorethan und Chlorbenzol zu verwenden. Vorzugsweise verwendet man Cyclohexan oder Kohlenwasserstoffe eines Siedebereiches von 60 bis 170 °C. Der Anteil der Ölphase am Aufbau der Wasser-in-Öl-Polymeremulsion beträgt 15 bis 70, vorzugsweise 20 bis 60 Gew.-%.

Um die wäßrige Monomerlösung in der Ölphase zu dispergieren, verwendet man die dafür bekannten Wasser-in-Öl-Emulgatoren. Hierbei handelt es sich beispielsweise um Sorbitanester, wie Sorbitanmonostearat, Sorbitanmonooleat, Sorbitanpalmitat und Sorbitanlaurat sowie um Glycerinester, deren Säurekomponente sich von $C_{14}$- bis $C_{20}$-Carbonsäuren ableitet. Weitere geeignete Emulgatoren sind die aus der DE-PS 25 57 324 bekannten Wasser-in-Öl-Emulgatoren, die erhältlich sind durch Umsetzung von

A) $C_{10}$-$C_{22}$-Fettalkoholen mit Epichlorhydrin im Molverhältnis 1:0,5 bis 1:1,5 zu Glycidylethern,

B) Reaktion der Glycidylether mit (1) gesättigten, 2 bis 6 OH-Gruppen enthaltenden $C_2$-$C_6$-Alkoholen oder deren Monoether mit $C_{10}$-$C_{22}$-Fettalkoholen, im Molverhältnis Glycidylether zu (1) oder (2) von 1:0,5 bis 1:6 in Gegenwart von Säuren oder Basen und

C) Alkoxylierung der Reaktionsprodukte gemäß (B) mit mindestens einem $C_2$-$C_4$-Alkylenoxid im Molverhältnis 1:1 bis 1:6.

Die in Betracht kommenden Wasser-in-Öl-Emulgatoren haben einen HLB-Wert von höchstens 8. Unter HLB-Wert versteht man die hydrophile-lipophile Balance des Emulgators, vgl. W.C. Griffin, J. Soc. Cosmet. Chem. Band 1, 311 (1949). Die Wasser-in-Öl-Emulgatoren werden, bezogen auf die eingesetzten Monomeren, in einer Menge von 2 bis 20, vorzugsweise 5 bis 15 Gew.-% eingesetzt. Vorzugsweise werden diejenigen Wasser-in-Öl-Emulgatoren eingesetzt, die in der genannten DE-PS 25 57 324 beschrieben sind.

Als geeignete Radikale bildende Polymerisationsinitiatoren können sämtliche üblicherweise eingesetzte Polymerisationsinitiatoren verwendet werden. Bevorzugt sind wasserlösliche Initiatoren, wie Alkali- oder Ammoniumperoxidisulfate, Wasserstoffperoxid, Diacetylperoxidicarbonat, Dicyclohexylperoxidicarbonat, tert.-Butylperpivalat, Dilauroylperoxid, Dibenzoylperoxid, tert.-Butylper-2-ethylhexanoat, tert.-Butylpermaleinat, Bis-(tert.-butylperoxid)-cyclohexan, tert.-Butylperacetat, Dicumylperoxid, Di-tert.-amylperoxid, Di-tert.-butylperoxid, Cumylhydroperoxid, tert.-Butylhydroperoxid und p-Menthanhydroperoxid sowie Azoinitiatoren, wie 2,2'-Azobis(2-methyl-N-phenylpropionamidin)dihydrochlorid, 2,2'-Azobis(2-methylpropionamidin)-dihydrochlorid, 2,2'-Azobis(2,4-dimethylvaleronitril), 2,2'-Azobis-(isobutyronitril), 2,2'-Azobis(2-amidinopropan)dihydrochlorid und 2,2'-Azobis-[2-(2-imidazolin-2-yl)propan]-dihydrochlorid. Bevorzugte Initiatoren sind Alkali- und Ammoniumpersulfate, tert.-Butylperpivalat, tert.-Butylper-2-ethylhexanoat, 2,2'-Azobis-(2,4-dimethylvaleronitril),2,2'-Azobis(2-amidinopropan)dihydrochlorid, Azobis-(isobutyronitril) und 2,2′-Azobis[2-(2-imidzolin-2-yl)propan]dihydrochlorid. Man kann entweder einen einzigen Initiator oder auch Mischungen mehrerer Initiatoren verwenden. Die Auswahl der Initiatoren richtet sich in erster Linie nach der Temperatur, bei der die Polymerisation durchgeführt wird. Man kann auch zusätzlich Salze von Schwermetallen, z.B. Kupfer-, Kobalt-, Mangan-, Eisen-, Nickel- und Chromsalze und/oder organische Verbindungen, wie Benzoin, Dimethylanilin, Ascorbinsäure sowie Reduktionsmittel, wie beispielsweise Alkalidisulfit oder Formaldehydnatriumsulfoxylat zusammen mit mindestens einem der oben angegebenen Radikale bildenden Polymerisationsinitiatoren einsetzen. Solche Mischungen von Initiatoren ermöglichen das Polymerisieren bei niedrigeren Temperaturen. Die reduzierende Komponente von sogenannten Redox-Initiatoren kann beispielsweise von Natriumsulfit, Natriumbisulfit, Natriumformaldehydsulfoxylat oder Hydrazin gebildet werden. Bezogen auf die bei der Polymerisation eingesetzten Monomeren benötigt man 100 bis 10.000, vorzugsweise 100 bis 2000 ppm eines Polymerisationsinitiators oder einer Mischung mehrerer Polymerisationsinitiatoren. Die angegebenen Initiatormengen entsprechen etwa 0,003 bis 0,3 Mol.% Initiator, bezogen auf die eingesetzten Monomeren.

In einer bevorzugten Ausführungsform der Erfindung wird die Polymerisation der wasserlöslichen Monomeren zusätzlich in Gegenwart mindestens eines Öl-in-Wasser-Emulgators durchgeführt. Der Einsatz dieser Gruppe von Emulgatoren ermöglicht die Herstellung besonders feinteiliger und sedimentationsstabiler Wasser-in-Öl-Polymeremulsionen. Geeignete Öl-in-Wasser-Emulgatoren sind beispielsweise sämtliche Netzmittel, die einen HLB-Wert von mindestens 10 haben. Bei dieser Gruppe von Emulgatoren handelt es sich im wesentlichen um hydrophile wasserlösliche Verbindungen, wie ethoxylierte Alkylphenole oder ethoxylierte Fettalkohole. Produkte dieser Art werden beispielsweise dadurch erhalten, daß man $C_8$- bis $C_{12}$-Alkylphenole oder $C_8$-$C_{22}$-Fettalkohole mit Ethylenoxid umsetzt. Vorzugsweise ethoxyliert man $C_{12}$-$C_{18}$-Fettalkohole. Das Molverhältnis von Alkylphenol bzw. Fettalkohol zu Ethylenoxid beträgt dabei im allgemeinen 1:5 bis 1:20. Weitere geeignete Emulgatoren sind beispielsweise alkoxylierte Fettamine. Sofern die Emulgatoren einen HLB-Wert von 10 oder darüber bei der Polymerisation eingesetzt werden, so verwendet man sie in Mengen von 1 bis 20, vorzugsweise 2 bis 15 Gew.-%, bezogen auf die zu polymerisierenden Monomeren.

Die Polymerisation der Monomeren erfolgt in der wäßrigen Phase einer Wasser-in-Öl-Emulsion in Gegenwart von Wasser-in-Öl-Emulgatoren und Schutzkolloiden, die üblicherweise bei der umgekehrten Suspensionspolymerisation eingesetzt werden und ggf. Öl-in-Wasser-Emulgatoren sowie in Gegenwart von Radikale bildenden Polymerisationsinitiatoren. Die dabei erhältlichen Wasser-in-Öl-Polymeremulsionen werden azeotrop entwässert.

Man erhält dann eine Suspension von feinteiligem Polymerisatpulver in der Ölphase. Der Wassergehalt der Polymersuspension beträgt nach dem Entwässerungsschritt bis zu 15 Gew.-%, vorzugsweise bis zu 10 Gew.-%, bezogen auf die gesamte Suspension.

Das wesentliche Merkmal des erfindungsgemäßen Verfahrens besteht darin, daß man die Polymerisation der wasserlöslichen Monomeren in Gegenwart von 0,1 bis 10 Gew.-%, bezogen auf die bei der Polymerisation eingesetzten Monomeren, an Schutzkolloiden durchführt oder die Schutzkolloide der Wasser-in-Öl-Polymersuspension nach Beendigung der Polymerisation zu einem beliebigen Zeitpunkt vor dem Isolieren der Polymerisatpulver zusetzt. Im zuletzt genannten Fall betragen die Mengen an Schutzkolloid 0,1 bis 10 Gew.-%, bezogen auf Polymer der gegebenenfalls entwässerten Wasser-in-Öl-Polymeremulsion. Sorbitanester können sowohl als Wasser-in-Öl-Emulgator als auch als Schutzkolloid eingesetzt werden wobei die verwendeten Wasser-in-Öl-Emulgatoren einer anderen Verbindungsklasse angehören als die Schutzkolloide. Wenn man beispielsweise einen Sorbitanester als Wasser-in-Öl-Emulgator einsetzt, so verwendet man als Schutzkolloid mindestens eine der üblicherweise bei der umgekehrten Suspensionspolymerisation als Schutzkolloid eingesetzten polymeren Verbindungen. Bevorzugt geht man beispielsweise so vor, daß man als Wasser-in-Öl-Emulgator diejenigen Produkte verwendet, die in der DE-PS 25 57 324 für die Herstellung besonders stabiler Wasser-in-Öl-Polymeremulsionen in Betracht kommen. Als Schutzkolloid setzt man in einem solchen Fall entweder Sorbitanester oder vorzugsweise polymere Schutzkolloide ein, die üblicherweise bei der umgekehrten Suspensionspolymerisation angewendet werden. Besonders bevorzugt zum Einsatz gelangende Schutzkolloide sind Sorbitanester, die oben bereits unter den Wasser-in-Öl-Emulgatoren genannt sind, sowie Pfropfpolymerisate, die gemäß der EP-A-0 290 753 als Schutzkolloid bei der umgekehrten Suspensionspolymerisation verwendet werden. Die Pfropfpolymerisate sind erhältlich durch Pfropfen von Polymerisaten (A), die

a) 40 bis 100 Gew.-% monovinylaromatische Monomere,

b) 0 bis 60 Gew.-% monoethylenisch ungesättigten Carbonsäuren mit 3 bis 6 C-Atomen, Maleinsäureanhydrid und/oder Itaconsäureanhydrid und

c) 0 bis 20 Gew.-% andere monoethylenisch ungesättigte Monomere, mit der Maßgabe einpolymerisiert enthalten, daß die Summe der Gewichtsprozente a) bis c) immer 100 beträgt, mit den im folgenden unter (1) bis (5) angegebenen Monomeren. Bei den Polymerisaten A) kann es sich entweder um Homopolymerisate von monovinylaromatischen Monomeren, wie Styrol, handeln oder um Copolymerisate der monovinylaromatischen Monomeren mit einer ethylenisch ungesättigten Carbonsäure oder einem Anhydrid einer monoethylenisch ungesättigten Carbonsäure.

Als Komponente a) der Polymerisate A) kommen monovinylaromatische Monomere in Betracht, z.B. Styrol, $\alpha$-Methylstyrol, $\alpha$-Alkylstyrole mit 2 bis 6 C-Atomen im Alkylrest, der geradkettig und/oder verzweigt sein kann, z.B. $\alpha$-Iso-Butylstyrol. Daneben eignen sich Vinylaromaten, die außer der Vinylgruppierung am aromatischen Kern eine $C_1$- bis $C_8$-Alkylgruppe tragen, z.B. Vinyltoluol, tert.-Butylstyrol, Halogenstyrole, Kern(alkyl)substituierte $\alpha$-Alkylstyrole mit 1 bis 8 C-Atomen im Kernalkylrest und mit 1 bis 6 C-Atomen im $\alpha$-Alkylrest, z.B. para-tert.-Butyl-$\alpha$-Methylstyrol. Vorzugsweise verwendet man aus dieser Monomerengruppe Styrol. Es ist zu 40 bis 100 Gew.-%, vorzugsweise 60 bis 95 Gew.-% am Aufbau des Polymerisates A) beteiligt.

Zu den Monomeren der Gruppe b) gehören monoethylenisch ungesättigte Carbonsäuren mit 3 bis 6 C-Atomen und/oder deren Anhydride, z.B. Acrylsäure, Methacrylsäure, Ethacrylsäure, Maleinsäure, Fumarsäure, Itaconsäure, Maleinsäureanhydrid, Itaconsäureanhydrid, Vinylmilchsäure, Vinylphosphonsäure und Vinylsulfonsäure. Diese Monomeren werden entweder allein oder in Mischung eingesetzt. Vorzugsweise verwendet man aus dieser Gruppe von Monomeren Acrylsäure, Methacrylsäure, Maleinsäureanhydrid und Itaconsäureanhydrid. Die Monomeren dieser Gruppe sind zu 0 bis 60, vorzugsweise 5 bis 40 Gew.-% am Aufbau der Polymerisate A) beteiligt.

Außer den Monomeren der Gruppen a) und b) können noch gegebenenfalls bis zu 20 Gew.-% andere monoethylenisch ungesättigte Monomere in den Polymerisaten A) in polymerisierter Form enthalten sein. Zu dieser Gruppe von Monomeren gehören beispielsweise die Ester der Acrylsäure, Methacrylsäure und/oder Ethacrylsäure, die sich von Alkoholen mit 1 bis 12 C-Atomen ableiten, z.B. Methylacrylat, Methylmethacrylat, tert.-Butylcyclohexylacrylat, tert.-Butylcyclohexylmethacrylat, Cyclohexylacrylat, Cyclohexylmethacrylat, tert.-Butylacrylat, tert.-Butylmethacrylat, n-Butylacrylat, n-Butylmethacrylat, Isobutylacrylat, Isobutylmethacrylat, 2-Ethylhexylacrylat, 2-Ethylhexylmethacrylat sowie Vinylester von gesättigten aliphatischen Carbonsäuren, die 2 bis 20 C-Atome enthalten, z.B. Vinylacetat, Vinylpropionat, Vinyllaurat, Vinylbutyrat und Vinylstearat. Eine andere Gruppe von Monomeren sind die Amide von Methacrylsäure, Acrylsäure und Ethacrylsäure. Hierbei kann es sich beispielsweise um Methacrylamid oder Acrylamid sowie um N-substituierte Amide, wie Methacrylsäure-N-tert.butylamid oder Acrylsäure-N-tert.-butylamid handeln. Eine weitere Klasse von Monomeren, die gegebenenfalls am Aufbau des Polymerisats A) beteiligt sind, sind Acrylnitril und Methacrylnitril. Die Monomeren der Gruppe der c) können entweder allein oder in Mischung in Mengen bis zu 20 Gew.-% im Copolymerisat A) einpolymerisiert sein. Die Summe der Angaben in Prozent a), b) und c) beträgt jeweils 100.

Die Polymerisate A) haben ein Molekulargewicht (Zahlenmittel) von 500 bis 20 000 und Hydrierjodzahlen (nach DIN 53 241) von 1,3 bis 51, vorzugsweise 2,5 bis 25,4. Es ist besonders bevorzugt, Polymerisate A) zu verwenden, deren Hydrierjodzahlen 5,1 bis 16,9 betragen. Das mittlere Molekulargewicht (Zahlenmittel) der Polymerisate A) beträgt vorzugsweise 1000 bis 10 000. Vorzugsweise werden solche Polymerisate A) eingesetzt, die in aliphatischen Kohlenwasserstoffen eines Siedebereichs von 50 bis 150 °C schwer löslich sind.

Solche Polymerisate sind bekannt. Sie werden beispielsweise durch Homo- oder Copolymerisation der Monomeren a) bis c) in Substanz bei 180 bis 400, vorzugsweise 200 bis 300 °C hergestellt. Besonders bevorzugt ist die kontinuierliche Substanzpolymerisation der Monomeren, die in dem angegebenen Temperaturbereich und insbesondere bei 200 bis 260 °C und Drücken von 1 bis 100, vorzugsweise 20 bis 50 bar in Abwesenheit von Polymerisationsinitiatoren oder auch in Gegenwart von Polymerisationsinitiatoren und Polymerisationsinhibitoren durchgeführt wird. Solche Polymerisationsverfahren sind beispielsweise aus folgenden Literaturstellen bekannt: DE-OS 3 026 831, DE-OS 3 046 476, US-PS 4 042 768 und US-PS 4 414 370.

Die Polymerisate A) dienen als Pfropfgrundlage für die Herstellung der erfindungsgemäß einzusetzenden Schutzkolloide. Zur Herstellung der Pfropfpolymerisate verfährt man im allgemeinen so, daß man zu einer Lösung oder Dispersion der Polymeren A) in einem aliphatischen und/oder aromatischen Kohlenwasserstoff - vorzugsweise verwendet man diejenigen Lösemittel, die anschließend bei der umgekehrten Suspensionspolymerisation als hydrophobe inerte Flüssigkeit verwendet werden - einen Teil des Polymerisationsinitiators und einen Teil der Monomerenmischung der Monomeren (1) bis (5) auf eine höhere Temperatur erhitzt und nach dem Beginn der Polymerisation die restlichen Monomeren und den Polymerisationsinitiator zugibt.

Als Monomere der Gruppe (1) verwendet man Acrylsäureester und/oder Methacrylsäureester von einwertigen 1 bis 20 C-Atome enthaltenden Alkoholen. Beispiele für diese Gruppe von Monomeren sind Methylacrylat, Methylmethacrylat, Ethylacrylat, Ethylmethacrylat, Propylacrylat, Isopropylacrylat, Propylmethacrylat, n-Butylacrylat, sec.-Butylacrylat, tert.-Butylacrylat, tert.-Butylmethacrylat, sek.-Butylmethacrylat, n-Butylmethacrylat, tert.-Butylcyclohexylacrylat, tert.-Butylcyclohexylmethacrylat, Cyclohexylacrylat, 2-Ethylhexylacrylat, 2-Ethylhexylmethacrylat und Laurylacrylat.

Außerdem können die Ester der Ethacrylsäure verwendet werden, die sich von einwertigen Alkoholen mit 1 bis 12 C-Atomen ableiten. Vorzugsweise verwendet man aus dieser Gruppe von Monomeren Acrylsäureester und/oder Methacrylsäureester von einwertigen, 3 bis 6 C-Atome enthaltenden Alkoholen. Ganz besonders bevorzugt ist der Einsatz von tert.-Butylacrylat, n-Butylacrylat und Isobutylacrylat oder deren Gemische in einer Menge von 85 bis 98 Gew.-%, bezogen auf die Monomerenmischung, die auf das Polymerisat A) aufgepfropft wird. Die Monomeren der Gruppe (1) werden im allgemeinen in einer Menge von 70 bis 100 Gew.-%, bezogen auf die aufzupfropfenden Monomeren, eingesetzt. Bei einer nur geringfügigen Modifizierung beträgt die Menge an Monomeren der Gruppe (1) 92,5 bis 100 Gew.-%.

Als Monomere der Gruppe (2) kommen monoethylenisch ungesättigte Carbonsäuren bis 3 bis 6 C-Atomen und/oder deren Anhydride in Betracht. Diese Gruppe von Monomeren entspricht den Monomeren der Gruppe b) der Polymerisate A). Es handelt sich im einzelnen hierbei beispielsweise um Acrylsäure, Methacrylsäure, Ethacrylsäure, Fumarsäure, die Anhydride der genannten Carbonsäuren und Maleinsäureanhydrid. Diese Gruppe von Monomeren wird gegebenenfalls bei der Herstellung der Pfropfpolymerisate mitverwendet und ist zu 0 bis 15 Gew.-% in der Monomerenmischung, die auf das Polymerisat A) aufgepfropft wird, vorhanden. Vorzugsweise verwendet man aus dieser Gruppe von Monomeren Acrylsäure, Methacrylsäure, Maleinsäureanhydrid oder Itaconsäureanhydrid in einer Menge von 0 bis 7,5 Gew.-%, bezogen auf die Monomeren.

Als Monomere der Gruppe (3) von Monomeren, die auf das Polymerisat A) aufgepfropft werden können, sind Acrylsäuremonoester und/oder Methacrylsäuremonoester von mindestens 2-wertigen Alkoholen zu nennen. Hierzu gehören beispielsweise Hydroxyethylacrylat, Hydroxyethylmethacrylat, Hydroxypropylacrylat, Hydroxypropylmethacrylat, Hydroxybutylacrylat und Hydroxybutylmethacrylat. Diese Gruppe von Monomeren wird gegebenenfalls bis zu 10 Gew.-% in der Monomermischung mitverwendet.

Eine weitere Modifizierung der Polymerisate A) kann durch Aufpfropfen von Monomeren der Gruppe (4) erfolgen. Zu diesen Monomeren gehören monovinylaromatische Verbindungen, die in einer Menge bis zu 15 Gew.-%, vorzugsweise 1 bis 7,5 Gew.-% in der Monomermischung enthalten sein können. Diese Monomeren sind identisch mit den Monomeren der Gruppe a) der Polymerisate A). Vorzugsweise wird aus dieser Gruppe von Monomeren Styrol verwendet.

Eine weitere Modifizierung kann dadurch erfolgen, daß die Mischung der Monomeren, die auf die Polymerisate A) aufgepfropft werden, als Monomere der Gruppe (5) gegebenenfalls bis zu 7,5 Gew.-% Acrylamid und/oder Methacrylamid enthalten. Die Summe der Gewichtsprozente der Monomeren der Gruppen (1) bis (5) beträgt immer 100. Die Monomeren (1) bis (5) werden in einer Menge von 97,5 bis 50 Gew.-%, vorzugsweise 90 bis 75, bezogen auf die Mischung aus Polymerisat A) und den Monomeren (1) bis (5), zur Herstellung der Pfropfpolymerisate eingesetzt.

Die Pfropfpolymerisation erfolgt im allgemeinen bei Temperaturen von 50 bis 150, vorzugsweise 60 bis 120 °C in Gegenwart von Polymerisationsinitiatoren, die im allgemeinen in einer Menge von 0,01 bis 6, vorzugsweise 0,1 bis 4 Gew.-%, bezogen auf das Gewicht der Polymeren A) und der Monomermischung, eingesetzt werden. Die Pfropfpolymerisation kann bei Normaldruck, sowie bei erhöhtem oder vermindertem Druck durchgeführt werden.

Als Schutzkolloide kommen außerdem Block- oder Pfropfpolymerisate in Betracht, die jeweils mindestens einen polymeren hydrophilen Teil und einen polymeren hydrophoben Teil im Molekül enthalten. Solche Polymerisate werden ausführlich in der DE-OS 32 20 114 beschrieben. Sie enthalten beispielsweise 70 bis 98 Gew.-% eines Diens, wie Cyclopentadien, Di-, Tri-, Tetracyclopentadien oder jeweils deren $C_1$-$C_3$-alkylsubstituierte Derivate und als Comonomer Maleinsäureanhydrid und/oder Maleinsäurehalbester, die sich von 1 bis 20 C-Atome enthaltenden Alkanolen ableiten. Zur Herstellung dieser Schutzkolloide können gegebenenfalls weitere copolymerisierbare Monomere aus der Gruppe 2 bis 12 C-Atome enthaltender Monoolefine und bis 12 C-Atome enthaltender Vinylaromaten sowie gegebenenfalls Acrylsäureester oder Methacrylsäureestern von Alkoholen mit 1 bis 20 C-Atomen, Acrylsäure, Methacrylsäure, Acrylnitril, Methacrylnitril, Vinylacetat und/oder Vinylpropionat eingesetzt werden. Als Schutzkolloide eignen sich außerdem alternierende Copolymerisate aus Maleinsäureanhydrid und Diisobuten, deren Anhydridgruppen teilweise oder vollständig mit $C_1$-$C_{20}$-Alkoholen verestert sind. Die als Schutzkolloide in Betracht kommenden Polymerisate haben K-Werte von 40 bis 50 (bestimmt nach H. Fikentscher, Cellulosechemie, Band 13, 58-64 und 71-74 (1932), in 1 %iger Lösung in Cyclohexanon).

Die Einsatzmenge an Schutzkolloid beträgt, bezogen auf die bei der Polymerisation eingesetzten Monomeren bzw. auf das aus den Monomeren gebildete Polymerisat, 0,1 bis 10, vorzugsweise 0,2 bis 5 Gew.-%.

Zur Herstellung der feinteiligen Polymerisatpulver mit Primärteilchen einer mittleren Größe von 0,1 bis 20 µm, bevorzugt 0,2 bis 15 µm, ergeben sich folgende Verfahrensvarianten:

Variante 1

Die wäßrige Monomerlösung, die ggf. einen wasserlöslichen Polymerisationsinitiator enthält, wird mit der Ölphase vereinigt, die einen Wasser-in-Öl-Emulgator gelöst enthält sowie ggf. noch einen öllöslichen Polymerisationsinitiator. Die Ölphase kann ggf. noch zusätzlich einen Öl-in-Wasser-Emulgator enthalten. Die organische Phase und die wäßrige Phase werden mit Hilfe eines Dispergators zu einer Wasser-in-Öl-Emulsion verarbeitet, die ggf. nach dem Zusatz von Polymerisationsinitiator, unter Stickstoffatmosphäre polymerisiert wird. Die Polymerisation kann unter erhöhten, vermindertem oder bei dem jeweils herrschenden atmosphärischen Luftdruck durchgeführt werden. Im Anschluß an die Hauptpolymerisation kann sich ggf. unter weiterem Initiatorzusatz eine Nachpolymerisation anschließen, die bei der Temperatur durchgeführt werden kann, bei der auch die Hauptpolymerisation durchgeführt wurde oder darunter oder auch darüber liegen kann. Nach Abschluß der Polymerisation setzt man das Schutzkolloid, ggf. gelöst in einem Kohlenwasserstoff, z.B. Cyclohexan, zu und entwässert das Reaktionsgemisch durch azeotropes Abdestillieren von Wasser. Danach erfolgt das Isolieren der suspendierten feinteiligen Polymerisatpulver aus der Polymersuspension.

Variante 2

Wie bei Variante 1 beschrieben, emulgiert man die wäßrige Monomerlösung in der Ölphase, die einen Wasser-in-Öl-Emulgator und ggf. ein Netzmittel sowie einen öllöslichen Polymerisationsinitiator enthält. Falls erforderlich, kann der Polymerisationsinitiator auch erst nach dem Emulgieren zugegeben werden. Hierbei kann man eine Mischung aus einem wasserlöslichen und einem wasserunlöslichen Initiator einsetzen oder einen wasserlöslichen oder wasserunlöslichen Initiator verwenden. Man fügt dann das Schutzkolloid zu, das vorteilhaft in einer Hilfsölphase gelöst ist, die besonders gut zum azeotropen Entwässern geeignet ist. Danach erfolgt die Polymerisation wie bei Variante 1 beschrieben, azeotropes Entwässern sowie das Isolieren der suspendierten feinteiligen Polymerisatpulver.

Variante 3

Man vereinigt die wäßrige Monomerlösung, die Ölphase, die die oben beschriebenen Hilfsmittel enthält und eine Lösung eines Schutzkolloids in einer Ölphase, z.B. Cyclohexan, und emulgiert die Mischung, so daß man eine feinteilige Wasser-in-Öl-Emulsion erhält. Man fügt ggf. einen Polymerisationsinitiator zu und polymerisiert die Wasser-in-Öl-Emulsion wie bei Variante 2 beschrieben unter Stickstoff, entwässert dann die Wasser-in-Öl-Polymeremulsion zu einer Polymersuspension und isoliert daraus das feinteilige Polymerisat. Das Entwässern kann auch bereits zusammen mit der Polymerisation erfolgen, sofern die Polymerisation beim Siedepunkt der Reaktionsmischung durchgeführt wird.

Variante 4

Die bei Variante 1 beschriebene wäßrige Monomerlösung und die Hilfsmittel enthaltende Ölphase werden miteinander vereinigt und emulgiert. In einem Polymerisationsreaktor erhitzt man unter Stickstoffatmosphäre eine Lösung eines Schutzkolloids in einem Kohlenwasserstoff auf die gewünschte Polymerisationstemperatur, gibt ggf. Starter zu und dosiert innerhalb von etwa 0,5 bis 5 Stunden die zuvor hergestellte Wasser-in-Öl-Monomeremulsion zu. Während der Zugabe der Wasser-in-Öl-Monomeremulsion dosiert man kontinuierlich Radikale bildende Polymerisationsinitiatoren. Nach Abschluß der Hauptpolymerisation kann sich ggf. eine Nachpolymerisation anschließen. Die so erhältliche Wasser-in-Öl-Polymeremulsion wird anschließend azeotrop entwässert und das feinteilige Polymerisat aus der Suspension in dem Kohlenwasserstoff isoliert.

Das Isolieren der feinteiligen Polymerisate geschieht in der Weise, daß man das Polymerisat abfiltriert oder abzentrifugiert. Nach dem erfindungsgemäßen Verfahren erhält man pulverförmige Polymerisate, die aus lockeren Agglomeraten von Primärteilchen bestehen. Beim Eintragen in Wasser zerfallen die Agglomerate, die eine Mindestgröße von 50 $\mu$m aufweisen, in die Primärteilchen, die eine mittlere Teilchengröße von 0,1 bis 20 $\mu$m haben.

Das Isolieren der feinteiligen Polymerisate aus Wasser-in-Öl-Emulsionen bzw. wasserfreien Polymersuspensionen in einem Kohlenwasserstofföl kann durch Zusatz eines Agglomerationsmittels stark beschleunigt werden. Durch den Zusatz geeigneter Agglomerationshilfsmittel in einer Menge von max. 10 Gew.-%, bevorzugt max. 5 Gew.-%, bezogen auf die Wasser-in-Öl-Emulsion bzw. Polymeremulsion in einem Kohlenwasserstofföl wird eine Agglomeration der feinteiligen Polymerisate hervorgerufen. Dadurch kommt es zu einer starken Erhöhung der Sedimentationsgeschwindigkeit des Polymerisats. Die Anreicherung von festem Polymerisat ist auch an der Ausbildung einer Phasengrenze zu erkennen, die eine feststoffreiche untere Phase von einem feststoffarmen Überstand trennt. Als Agglomerationsmittel eignen sich bevorzugt polare aprotische Lösemittel. Geeignete polare aprotische Agglomerationsmittel besitzen in der Gasphase (vgl. Handbook of Chem. and Phys., 55. Auflage, CRC-Press Inc., Cleveland, 1974, Seite E-63ff) oder in Lösung (vgl. C. Reichert, "Solvent effect in Org. Chem.", Verlag Chemie, Weinheim, New York, 1979, Seite 270ff) ein Dipolmoment von mehr als 2, bevorzugt von mehr als 3 Debye oder einen Lösungsmittelpolaritäts-Parmeter $E_T$ von mehr als 35, vorzugsweise 40 kcal/mol (vgl. C. Reichert, Solv. effect in Org. Chem.",

1979, Seite 270ff).

Geeignete Agglomerationshilfsmittel sind beispielsweise Ethylenglykoldimethylether, N-Methylpyrrolidon, N,N-Dimethylformamid, N,N-Dimethylacetamid, Acetonitril, Dimethylsulfoxid, Tetrahydrothiophen-1,1-dioxid, Nitromethan, Ethylencarbonat, Propylencarbonat und Mischungen von mindestens zwei der genannten Verbindungen. Der Zusatz der Agglomerationsmittel bewirkt, daß sich die Polymerisatsuspensionen mit weniger Feststoff im Filtrat filtrieren lassen als die unbehandelten sowie daß darüber hinaus auch die Fest-Flüssigtrennung durch Zentrifugieren in erheblich kürzeren Zeiten möglich wird als ohne Zusatz der Agglomerationsmittel.

Hochmolekulare wasserlösliche Polymerisate werden beispielsweise als Flockungsmittel für Schlämme oder zur Klärung von Abwässern aus industriellen und kommunalen Kläranlagen verwendet. Vernetzte, wasserquellbare Polymerisate können zum Verdicken von wäßrigen Systemen eingesetzt werden, z.B. als Verdickungsmittel im Textildruck, zum Verdicken von Papierstreichmassen oder zum Verdicken von wäßrigen Anstrichdispersionen.

Die in den Beispielen angegebenen Teile sind Gewichtsteile, die Angaben in Prozent bedeuten Gewichtsprozent. Die Teilchengrößen der Polymerisate stammen aus Rasterelektronenmikroskop-Aufnahmen. Die Bestimmung wurde an den Polymerisatpulvern nach der azeotropen Entwässerung und der Trocknung im Vakuum durchgeführt. Der Wassergehalt der Polymerisate lag dabei unter 8 Gew.-%.

In den Beispielen wurden u.a. folgende Stoffe verwendet:

Wasser-in-Öl-Emulgator 1

Dieser Emulgator wurde hergestellt durch Umsetzung von

(A) Oleylalkohol mit Epichlorhydrin im Molverhältnis 1:1 zu Oleylglycidylether,

B) Reaktion des Oleylglycidylethers mit Glycerin im Molverhältnis 1:1 in Gegenwart von $BF_3$-Phosphorsäure bei einer Temperatur von 80 °C und Entfernen des Katalysators mit Hilfe eines basischen Ionenaustauschers und

C) Ethoxylierung des Reaktionsprodukts gemäß (B) mit 2 Mol Ethylenoxid.

Öl-in-Wasser-Emulgator 1

Hierbei handelt es sich um das Additionsprodukt von 8 Mol Ethylenoxid an 1 Mol Nonylphenol, mit einem HLB-Wert von 12,5 nach W.C. Griffin, J. Soc. Cosmetic Chemists, Band 1, 311 (1949).

Schutzkolloid 1

In einer Polymerisationsapparatur, die aus einem Reaktionsgefäß bestand, das mit einem Rückflußkühler, Thermometer, einer Heizung und einer Kühlvorrichtung, einem Rührer, Zulaufgefäßen und für das Arbeiten unter Inertgasatmosphäre ausgerüstet war, wurde eine Mischung aus folgenden Bestandteilen vorgelegt und zum Sieden unter Rückfluß erhitzt:

1700 g eines Polymeren, das durch kontinuierliches Polymerisieren einer Monomermischung aus 83 % Styrol und 17 % Methacrylsäure bei einer Temperatur von 249 bis 251 °C bei einem Druck von 24 mbar hergestellt wurde. Ein Molekulargewicht von 1870, eine Säurezahl von 104 mg KOH/g, eine Hydrieriodzahl von 14 g pro 100 g Polymer und einem Erweichungspunkt von 138 °C hatte,

532 g Maleinsäureanhydrid,

1600 g Cyclohexan,

2470 g tert.-Butylacrylat und

65 g tert.-Butylperpivalat.

Innerhalb von 2 Stunden nach Beginn des Rückflußfließsiedens gab man jeweils eine Lösung von 4730 g tert.-Butylacrylat und 568 g Styrol in 1766 g Cyclohexan zu und gleichzeitig damit eine Lösung von 260 g tert.-Butylperpivalat in 833 g Cyclohexan. Nach der vollständigen Dosierung der Monomeren und des Polymerisationsinitiators wurde das Reaktionsgemisch noch 2 Stunden beim Rückflußsieden gerührt und danach mit Cyclohexan verdünnt. Man erhielt eine Schutzkolloid-Dispersion mit einem Polymergehalt von 40 %. Das Pfropfcopolymerisat hatte einen K-Wert von 32.

Schutzkolloid 2

Copolymerisat aus 89,4 % Dicyclopentadien, 5,9 % Styrol und 4,7 % Maleinsäureanhydrid mit einem Molekulargewicht von 900 und einer Iodzahl von 70, vgl. DE-PS 27 10 372.

Beispiele

Zusammensetzung der wäßrigen Monomerlösung in den Beispielen 1 bis 9

262 g Wasser
200 g Acrylsäure
200 g 25 %ige wäßrige Ammoniaklösung,
50 g 50 %ige wäßrige Acrylamidlösung,
0,18 g Methylenbisacrylamid,
0,45 g Ameisensäure und
72 g Pentanatriumsalz der Diethylentriaminpentaessigsäure.

Durch Zugabe von wäßrigem Ammoniak wurde die Monomerlösung auf einen pH-Wert von 8 eingestellt.

Zusammensetzung der organischen Phase in den Beispielen 1 bis 9

250 g Cyclohexan
x g Wasser-in-Öl-Emulgator 1
y g Öl-in-Wasser-Emulgator 1.

Beispiel 1

Nach Zugabe von 0,375 ml einer 15 %igen wäßrigen Lösung von 2,2'-Azobis(2-amidinopropan)-dihydrochlorid zur Monomerlösung gibt man dazu die organische Phase mit x = 20 und y = 9 und stellt unter Einleiten von Stickstoff eine Wasser-in-Öl-Emulsion her, die auf eine Temperatur von 50 bis 55 °C erhitzt wird, wobei die Monomeren polymerisieren. Die Polymerisation ist nach 120 Minuten beendet. Man fügt dann nochmals 0,375 ml der oben beschriebenen wäßrigen Lösung des Initiators zu und unterwirft das Gemisch anschließend noch 30 Minuten einer Nachpolymerisation bei einer Temperatur von 55 bis 60 °C.

In einem Kessel aus Edelstahl, der mit Rührer und Wasserabscheider versehen ist, werden 5,7 g Sorbitanmonooleat in 1 l Cyclohexan vorgelegt. Zu dieser Lösung gibt man die auspolymerisierte Wasser-in-Öl-Emulsion und destilliert das Wasser azeotrop ab. Man erhält eine Dispersion eines vernetzten, wasserquellbaren Polymeren, die rasch sedimentiert. Durch Filtration und anschließende Trocknung des pulverförmigen Polymerisats bei 50 °C im Vakuum erhält man ein aus lockeren Agglomeraten von Primärteilchen bestehendes Polymerisat. Die aus Raster-Elektronenmikroskop-Aufnahmen bestimmte mittlere Teilchengröße der Primärteilchen liegt unter 2 µm.

Beispiel 2

Man verfährt wie im Beispiel 1 mit der einzigen Ausnahme, daß x = 15 ist. Man erhält in Wasser rasch zerfallende Agglomerate von Primärteilchen des Polymerisats mit enger Korngrößenverteilung. Die im Raster-Elektronenmikroskop bestimmte mittlere Teilchengröße der Primärteilchen beträgt etwa 1 µm.

Vergleichsbeispiel 1

Man verfährt wie im Beispiel 1 mit der einzigen Ausnahme, daß man im Kessel aus Stahl lediglich Cyclohexan vorlegt, d.h. die Entwässerung in Abwesenheit von Sorbitanmonooleat durchführt. Während der azeotropen Entwässerung bildet sich zunächst ein starker Belag an Kesselwand und Rührer. Im weiteren Verlauf der Entwässerung koaguliert der Ansatz.

Allgemeine Vorschrift für die Beispiele 3 bis 9

Zur Herstellung der Monomeremulsion wird die Monomerlösung in einem Glasgefäß mit einer organischen Phase sowie 0,375 ml einer 15 %igen wäßrigen Lösung von 2,2'-Azobis(2-amidinopropan)-dihydrochlorid versetzt und 1 Stunde unter Durchleiten von Stickstoff emulgiert.

In einem Kessel aus Edelstahl werden 5,7 g Sorbitanmonooleat und 1 l Cyclohexan vorgelegt, unter Stickstoffeinleitung auf 52 °C erwärmt und die polymerisierbare Monomeremulsion während 1 Stunde zudosiert. 30 Minuten nach Zugabe der Monomeremulsion fügt man 0,375 ml einer 15 %igen wäßrigen Lösung von 2,2'-Azobis(2-amidinopropan)dihydrochlorid zu und unterwirft die Emulsion nach 1 Stunde einer

Nachpolymerisation bei 55 °C. Sie wird dann azeotrop entwässert und das Polymere daraus wie in Beispiel 1 angegeben isoliert.

Beispiel 3

x = 20, y = 9

Die Primärteilchen des gebildeten Polymerisats weisen eine breitere Korngrößenverteilung auf als die in Beispiel 1 erhaltenen Partikeln. Die mittlere Teilchengröße liegt im Bereich von 2 µm, die maximale Teilchengröße beträgt etwa 4 µm.

Vergleichsbeispiel 2

Man verfährt wie im Beispiel 3 angegeben, verzichtet jedoch auf den Einsatz von Sorbitanmonooleat als Schutzkolloid vor der azeotropen Entwässerung. Während der Entwässerung agglomeriert der Ansatz. Der überwiegende Teil des Polymerisats fällt als Koagulat an.

Beispiel 4

x = 20, y = 18

Während der Polymerisation entstehen geringe Beläge an Kesselwand und Rührer. Die Primärteilchen des Polymerisats weisen eine breite Korngrößenverteilung auf. Ihre mittlere Teilchengröße ist kleiner als 2 µm.

Beispiel 5

x = 20, y = 23

Nach der Trocknung werden lockere Agglomerate von Primärteilchen erhalten. Die kugelförmigen, einzelnen Polymerpartikeln haben einen mittleren Durchmesser von unter 1,5 µm.

Beispiel 6

x = 20, y = 28

Man erhält lockere Agglomerate von kugelförmigen Primärteilchen, die eine enge Teilchengrößenverteilung aufweisen und im Mittel kleiner als 1 µm sind.

Beispiel 7

x = 15, y = 7

Man erhält ein Polymerisat in Form von kugelförmigen Partikeln mit einer breiten Korngrößenverteilung im Bereich von 0,2 bis 5 µm.

Beispiel 8

x = 40, y = 18

Man erhält überwiegend große Polymerisatpartikeln mit bis zu 4 µm Durchmesser. Daneben entstehen noch kleine Teilchen mit einem mittleren Durchmesser von unter 0,5 µm.

Beispiel 9

x = 40, y = 33

An Kesselwand und Rührer bilden sich Kornbeläge. Die kugelförmigen Primärteilchen des Polymerisats lagern sich zu traubenförmigen Agglomeraten zusammen. Die einzelnen Partikeln weisen eine enge Korngrößenverteilung mit einem Maximum unterhalb von 1 µm auf.

Zusammensetzung der wäßrigen Phase der Wasser-in-Öl-Emulsion in den Beispielen 10 bis 13

170 g Wasser
200 g Acrylsäure
190 g 25 %ige wäßrige Ammoniaklösung
48 g 50 %ige wäßrige Acrylamidlösung
89,6 mg Methylenbisacrylamid
0,12 g Ameisensäure
72 mg Pentanatriumsalz der Diethylentriaminpentaessigsäure

Zusammensetzung der organischen Phase I in den Beispielen 10 bis 13

250 g Cyclohexan
20 g Wasser-in-Öl-Emulgator 1
23 g Öl-in-Wasser-Emulgator 1

Zusammensetzung der organischen Phase II in den Beispielen 10 bis 13

1000 ml Cyclohexan und 5,4 g Schutzkolloid 1

Beispiel 10

Die wäßrige Phase, die organische Phase I und 1,12 g einer 3 %igen wäßrigen Lösung von 2,2-Azobis-(2-amidinopropan)dihydrochlorid werden unter Stickstoffatmosphäre 1 Stunde bei Raumtemperatur voremulgiert. Nach Zugabe der organischen Phase II wird das Reaktionsgemisch auf 55 °C erwärmt, 2 Stunden bei dieser Temperatur polymerisiert und nach Zugabe von 1,9 g einer 3 %igen wäßrigen Lösung von 2,2-Azobis(2-amidinopropan)dihydrochlorid eine Stunde nachpolymerisiert. Nach azeotroper Entwässerung, Filtration und Trocknung bei 50 °C im Vakuum erhält man ein pulverförmiges, vernetztes, wasserquellbares Polymerisat. Die rasterelektronenmikroskopische Aufnahme zeigt lockere Agglomerate von kugelförmigen Primärteilchen, die einen Durchmesser von weniger als 3 µm aufweisen.

Beispiel 11

Die wäßrige Phase, die organischen Phasen I und II sowie 34 mg 2,2-Azobis(2-amidinopropan)-dihydrochlorid werden vereinigt und 1 Stunde unter Stickstoffatmosphäre gerührt und dadurch emulgiert. Anschließend erwärmt man die Monomeremulsion und erniedrigt den Druck soweit, daß die Reaktionsmischung bei 55 °C siedet. Bei dieser Temperatur wird dann 2 Stunden polymerisiert und nach Zugabe von 0,056 g 2,2-Azobis(2-amidinopropan)dihydrochlorid eine weitere Stunde nachpolymerisiert. Die azeotrope Entwässerung sowie Aufarbeitung erfolgen wie im Beispiel 10 angegeben. Man erhielt ein Polymerisat in kugelförmiger Primärteilchen mit einer mittleren Teilchengröße von 2 µm.

Beispiel 12

Aus der wäßrigen Phase, der organischen Phase I und 0,04 g 2,2-Azobis(2-amidinopropan)-dihydrochlorid wird durch einstündiges Rühren unter Stickstoff eine polymerisierbare Monomeremulsion hergestellt. Die organische Phase II wird in einem separaten Polymerisationsreaktor auf eine Temperatur von 55 °C erhitzt, die Monomeremulsion zugegeben und 1 Stunde polymerisiert. Nach Zugabe von 1,88 g einer 3 %igen Lösung von 2,2′-Azobis(2-amidinopropan)dihydrochlorid wird eine Stunde nachpolymerisiert, dann azeotrop entwässert und nach der im Beispiel 10 angegebenen Vorschrift aufgearbeitet. Man erhält Agglomerate aus kugelförmigen Primärteilchen mit einer maximalen Teilchengröße von 3 µm.

Beispiel 13

Man erhitzt die organische Phase II auf eine Temperatur von 55 °C und gibt dann innerhalb von 1 Stunde eine polymerisierbare Monomeremulsion bestehend aus der wäßrigen Phase, der organischen Phase I und 1,12 g einer 3 %igen wäßrigen Lösung von 2,2'-Azobis(2-amidinopropan)dihydrochlorid zu. Nach Beendigung erfolgt die Nachpolymerisation und Aufarbeitung wie in Beispiel 12 angegeben. Man erhält ein pulverförmiges Polymerisat, dessen kugelförmige Primärteilchen eine mittlere Teilchengröße von unter 2 µm aufweisen.

Wäßrige Phase der Beispiele 14 und 15

5000 g Wasser
5000 g Acrylsäure
5275 g 25 %ige wäßrige Ammoniaklösung
1200 g 50 %ige wäßrige Acrylamidlösung
4,5 g Methylenbisacrylamid
11,3 g Ameisensäure
1,8 g Pentanatriumsalz der Diethylentriaminpentaessigsäure

Organische Phase I in den Beispielen 14 und 15

6250 g Cyclohexan
500 g Wasser-in-Öl-Emulgator 1 und
575 g Öl-in-Wasser-Emulgator 1.

Organische Phase II in Beispiel 14

25 l Cyclohexan und 135 g Sorbitanmonooleat

Organische Phase II in Beispiel 15

25 l Cyclohexan und 135 g Schutzkolloid 1

Beispiel 14

Die organische Phase II wird in einem Reaktionskessel vorgelegt, unter Rühren erhitzt, die Siedetemperatur auf 60 °C durch erniedrigen des Drucks eingestellt. Aus der wäßrigen Phase und der organischen Phase I wird eine wäßrige Monomeremulsion hergestellt, weitgehend von Sauerstoff befreit und unter kontinuierlichem Zumischen von 650 ml einer 1 %igen wäßrigen Lösung von 2,2'-Azobis(2-amidinopropan)-dihydrochlorid während 1 Stunde in den Reaktionskessel dosiert. Danach werden 150 ml einer 1 %igen wäßrigen Lösung von 2,2'-Azobis(2-amidinopropan)dihydrochlorid zugegeben und das Reaktionsgemisch 1 Stunde bei 60 °C nachpolymerisiert. Es wird dann entwässert, filtriert und im Vakuumtrockenschrank getrocknet. Man erhält das Polymerisat in Form eines Pulvers, dessen Primärteilchen eine breite Korngrößenverteilung aufweisen. Im Raster-Elektronenmikroskop wird eine mittlere Teilchengröße von unter 5 µm gefunden.

Beispiel 15

Dieses Beispiel unterscheidet sich vom Beispiel 14 lediglich in der Zusammensetzung der organischen Phase II (Schutzkolloid 1 anstelle von Sorbitanmonooleat). Man erhält pulverförmige Polymerisate, bei denen die Polymerpartikeln im Raster-Elektronenmikroskop eine enge Korngrößenverteilung aufweisen und eine mittlere Teilchengröße von unter 1 µm besitzen.

Zusammensetzung der wäßrigen Phase der Beispiele 16 bis 21

393 + x g Wasser
350 g Acrylsäure
340 - x g 25 %ige wäßrige Ammoniaklösung

200 mg Methylenbisacrylamid
120 mg Pentanatriumsalz der Diethylentriaminpentaessigsäure

Zusammensetzung der organischen Phase I der Beispiele 16 bis 21

375 g Cyclohexan
m g Wasser-in-Öl-Emulgator 1
n g Öl-in-Wasser-Emulgator 1

Zusammensetzung der organischen Phase II der Beispiele 16 bis 21

1,5 l Cyclohexan sowie die in den einzelnen Beispielen angegebenen Mengen an Schutzkolloid.

Beispiel 16

x = 0, m = 30 und n = 15

Die wäßrige Phase wird mit der organischen Phase I und 0,5 ml einer 15 %igen wäßrigen Lösung von 2,2'-Azobis(2-amidinopropan)dihydrochlorid vereinigt und 1 Stunde unter Durchleiten von Stickstoff voremulgiert. Anschließend wird die Mischung auf 55 °C erwärmt, 2 Stunden bei dieser Temperatur polymerisiert, nochmals die gleiche Menge des Azostarters zugegeben und 1 Stunde nachpolymerisiert. Das Reaktionsgemisch wird dann zur organischen Phase II, die 5,7 g Sorbitanmonooleat als Schutzkolloid enthält, gegeben. Durch azeotrope Entwässerung, Filtration und anschließende Trocknung des Pulvers im Vakuumtrockenschrank wird ein pulverförmiges, feinteiliges Polymerisat gewonnen. Das Pulver bewirkt beim Eintragen in Wasser eine starke Erhöhung der Viskosität, so daß nach wenigen Minuten Quellzeit ein klares, strukturloses Gel gebildet wird.

Beispiel 17

x = 76, m = 60 und n = 15

Die wäßrige Phase wird mit der organischen Phase I sowie mit 1,2 ml einer 15 %igen wäßrigen Lösung von 2,2'-Azobis(2-amidinopropan)dihydrochlorid vereinigt und 1 Stunde voremulgiert. Anschließend wird 20 Minuten unter Rühren Stickstoff durch die Monomeremulsion geleitet. Diese polymerisationsfähige Mischung dosiert man innerhalb einer Stunde zur organischen Phase II, die auf 55 °C erwärmt wurde und die 8,6 g Sorbitanmonooleat als Schutzkolloid enthielt. 30 Minuten nach Zulaufende werden nochmals 1,2 ml der Initiatorlösung zugegeben und das Reaktionsgemisch noch 1 Stunde bei 60 °C nachpolymerisiert. Die Reaktionsmischung wird azeotrop entwässert, das Polymerisat abfiltriert und im Vakuumtrockenschrank getrocknet. Man erhielt ein pulverförmiges Polymerisat, das aus leicht agglomerierten, kugelförmigen Primärteilchen mit einer mittleren Teilchengröße von unterhalb 5 µm bestand.

Beispiel 18

x = 0, m = 30 und n = 35

Beispiel 17 wird mit der einzigen Ausnahme wiederholt, daß die organische Phase II 8,1 g des Schutzkolloids 1 anstelle von Sorbitanmonooleat enthielt. Man erhält ein pulverförmiges Polymerisat mit den gleichen Eigenschaften wie in Beispiel 16 beschrieben.

Beispiel 19

x = 130, m = 45 und n = 7,5

Aus der organischen Phase I, der wäßrigen Phase und 1,1 ml einer 15 %igen wäßrigen Lösung von 2,2'-Azobis(2-amidinopropan)dihydrochlorid wird durch einstündiges Emulgieren eine Monomeremulsion hergestellt, die dann 20 Minuten mit Stickstoff begast und innerhalb 1 Stunde zu der organischen Phase II, die kein Schutzkolloid enthält, zudosiert wird. Nach 30 Minuten gibt man nochmals 1,1 ml der 15 %igen wäßrigen Lösung des Azostarters zu, polymerisiert 1 Stunde nach und versetzt dann das Reaktionsgemisch

mit 3 g des Schutzkollids 1. Die Wasser-in-Öl-Polymeremulsion wird entwässert. Sie kann danach leicht filtriert werden. Durch Filtration und Trocknung erhält man ein feinteiliges pulverförmiges Polymerisat mit kugelförmigen Primärpartikeln.

Beispiel 20

x = 200, m = 45 und n = 0

Polymerisation und Aufarbeitung erfolgten wie in Beispiel 19 angegeben. Man erhielt ein feinteiliges, pulverförmiges Polymerisat, das in Wasser stark verdickende Wirkung besaß.

Beispiel 21

x = 232, m = 45 und n = 0

Die Polymerisation und Aufarbeitung erfolgten wie in Beispiel 19 beschrieben. Man erhielt ein feinteiliges, pulverförmiges Polymerisat, das in Wasser stark verdickende Wirkung besaß.

Beispiel 22

Unter Kühlen wird aus 190 g Wasser, 200 g Acrylsäure, 1000 mg eines Polyethylenglykoldiacrylats, dessen Polyethylenglykolsegment ein mittleres Molekulargewicht von 1500 g/mol hatte, 70 ml Pentanatriumsalz der Diethylentriaminpentaessigsäure und 217 g 50 %iger wäßriger Natronlauge, die Monomerlösung hergestellt, die dann mit der organischen Phase bestehend aus 250 g Cyclohexan, 20 g des Wasser-in-Öl-Emulgators 1 und 23 g des Öl-in-Wasser-Emulgators 1 vereinigt und 1 Stunde unter Durchleiten von Stickstoff voremulgiert wird. Nach Zugabe von 24,6 ml einer 3 %igen wäßrigen Lösung von 2,2′-Azobis(2-amidinopropan)dihydrochlorid dosiert man die polymerisationsfähige Mischung innerhalb 1 Stunde zu 1 l Cyclohexan, das auf einer Temperatur von 50 °C gehalten wird und 5,4 g des Schutzkolloids 1 gelöst enthält. Nach Beendigung der Zugabe der polymerisationsfähigen Mischung wird das Reaktionsgemisch noch 1 Stunde nachpolymerisiert, mit 1,88 g 3 %iger wäßriger Initiatorlösung versetzt und eine weitere Stunde bei 50 °C nachpolymerisiert. Die Aufarbeitung des Reaktionsgemisches erfolgte wie in Beispiel 17. Man erhielt ein feinteiliges, pulverförmiges Polymerisat, das aus schwach agglomerierten, kugelförmigen Primärteilchen mit einer mittleren Teilchengröße unter 2 µm bestand.

Herstellung wasserlöslicher Polymerisate

Die in den folgenden Beispielen angegebenen K-Werte wurden nach H. Fikentscher, Cellulose Chemie, Band 13, 58-64 und 71-74 (1932) bestimmt; dabei bedeutet $K = k \cdot 10^3$. Die K-Werte wurden bei einer Polymerisatkonzentration von 0,1 % in 5 %iger Natriumchloridlösung und einer Temperatur von 25 °C ermittelt.

Beispiel 23

Man stellt zunächst eine wäßrige Phase her, indem man in 178 g Wasser, 200 g Acrylsäure, 72 mg Pentanatriumsalz der Diethylentriaminpentaessigsäure und 202 g 25 %iger wäßriger Ammoniaklösung einträgt. Die organische Phase erhält man durch Mischen von 250 g Cyclohexan, 20 g des Wasser-in-Öl-Emulgators 1 und 23 g des Öl-in-Wasser-Emulgators 1. Die wäßrige Phase wird mit der organischen Phase vereinigt, 1 Stunde unter Durchleiten von Stickstoff emulgiert und anschließend mit 24,6 g einer 3 %igen wäßrigen Lösung von 2,2′-Azobis(2-amidinopropan)dihydrochlorid vereinigt.

In einem Stahlkessel wird dann eine Lösung von 5,4 g des Schutzkolloids 1 in 1000 ml Cyclohexan auf 50 °C erhitzt und der Druck soweit reduziert, daß die Lösung bei dieser Temperatur siedet. Zu der siedenden Lösung gibt man dann innerhalb von 5 Minuten die polymerisationsfähige Wasser-in-Öl-Monomeremulsion, polymerisiert eine Stunde bei 50 °C, versetzt dann mit 1,88 g der 3 %igen Initiatorlösung, führt bei 50 °C 1 Stunde lang eine Nachpolymerisation durch und entwässert das Reaktionsgemisch azeotrop. Nach dem Abkühlen des Reaktionsgemisches filtriert man das Polymerisat ab und trocknet es im Vakuumtrockenschrank. Man erhält ein feinteiliges, pulverförmiges Polymerisat bestehend aus schwach agglomerierten Primärteilchen mit einer mittleren Teilchengröße unter 2 µm, das sich beim Eintragen in Wasser rasch auflöst. Der K-Wert beträgt 197. Das Polymerisat kann als Flockungs-, Schlichte- oder

Waschhilfsmittel verwendet werden.

Beispiel 24

Man stellt zunächst eine wäßrige Phase her, indem man in 248 g Wasser, 200 g Acrylsäure, 0,072 g Pentanatriumsalz der Diethylentriaminpentaessigsäure und 217 g einer 50 %igen wäßrigen Natronlauge löst. Die organische Phase, Herstellung der Emulsion und Polymerisation sowie Aufarbeitung werden wie in Beispiel 23 beschrieben durchgeführt. Man erhält ein feinteiliges Polymerisat in Form von schwach agglomerierten Primärpartikeln mit einer mittleren Teilchengröße von 3 µm. Das feinteilige Polymerisat löst sich beim Eintragen in Wasser rasch auf. Das Polymerisat hat einen K-Wert von 198,2. Das Polymerisat eignet sich als Flockungsmittel für Schlämme.

Beispiel 25

Man stellt eine wäßrige Phase her, indem man 1,53 mol (110 g) Acrylsäure in 117 g Wasser löst, durch Zugabe von 50 %iger wäßriger Natronlauge bis zu einem pH-Wert von 7,0 neutralisiert, dann mit 418 g einer 50 %igen wäßrigen Lösung von Acrylamid, 200 mg Pentanatriumsalz der Diethylentriaminpentaessigsäure und 0,2 g Ameisensäure versetzt. Die wäßrige Monomerphase wird dann unter Rühren mit einer organischen Phase gemischt, die aus 250 g Cyclohexan, 26,7 g des Wasser-in-Öl-Emulgators 1 und 20 g des Öl-in-Wasser-Emulgators 1 besteht. Dann fügt man 81 g einer 3 %igen wäßrigen Lösung von 2,2'-Azobis(2-amidinopropan)dihydrochlorid zu und führt eine Voremulgierung durch, indem man die Mischung 1 Stunde mit Stickstoff begast.

In einer Polymerisationsapparatur wird eine Lösung von 16 g des Schutzkolloids 1 in 1000 ml Cyclohexan auf 65 °C erwärmt und der Druck soweit abgesenkt, daß die Lösung unter Rückfluß siedet. Bei dieser Temperatur dosiert man dann während 1 Stunde die polymerisationsfähige Monomeremulsion zur Vorlage, polymerisiert 1 Stunde nach, entwässert azeotrop und isoliert das Polymerisat durch Filtration. Man erhält ein feinteiliges Polymerisat, das aus kugelförmigen Primärpartikeln mit einer mittleren Teilchengröße unter 10 µm besteht. Beim Eintragen in Wasser löst sich das Polymerisat rasch auf. Es hat einen K-Wert von 162. Das Copolymerisat wird als Flockungsmittel zur Schlammentwässerung im Bergbau verwendet.

Beispiel 26

Durch Mischen von 500 g 50 %iger wäßriger Acrylamidlösung, 200 ml Wasser, 500 ppm des Pentanatriumsalzes der Diethylentriaminpentaessigsäure und 0,1 mol Ameisensäure stellt man eine wäßrige Phase her. Die organische Phase wird durch Lösen von 15 g des Wasser-in-Öl-Emulgators 1 und 10 g des Öl-in-Wasser-Emulgators 1 in 250 g Cyclohexan erhalten. Die wäßrige Phase und die organische Phase werden miteinander vereinigt, mit 0,025 mol.% 2,2'-Azobis-[2-(2-imidazolin-yl)propan]dihydrochlorid versetzt und 1 Stunde unter Durchleiten von Stickstoff emulgiert. Die polymerisationsfähige Emulsion wird dann wie im Beispiel 25 beschrieben mit den Ausnahmen weiterverarbeitet, daß die Schutzkolloidmenge 10,6 g beträgt und die Polymerisation bei 40 °C durchgeführt wird.

Nach der Aufarbeitung erhält man ein feinteiliges, pulverförmiges Polymerisat, das überwiegend aus 100 bis 200 µm großen Agglomeraten besteht, die aus Primärteilchen mit einer mittleren Teilchengröße von etwa 5 µm gebildet werden. Das hochmolekulare, sehr gut wasserlösliche Polyacrylamid mit einem K-Wert von 215,3 ist als Flockungsmittel geeignet. Es wird hauptsächlich zum Flocken von sauren Abwässern oder Schlämmen verwendet.

Allgemeine Herstellvorschrift für die Beispiele 27 bis 30

Die wäßrige Phase wird, wie in den Beispielen 27 bis 30 im einzelnen angegeben ist, hergestellt und mit einer organischen Phase gemischt, die aus 250 g Cyclohexan, 20 g des Wasser-in-Öl-Emulgators 1 und 15 g des Öl-in-Wasser-Emulgators 1 besteht. Die in den Beispielen angegebenen Mengen an Radikale bildenden Polymerisationsinitiator wird in Form einer 3 %igen wäßrigen Lösung zugesetzt und die Mischung jeweils 1 Stunde unter Durchleiten von Stickstoff emulgiert. Anschließend versetzt man mit 1000 ml Cyclohexan, das jeweils, bezogen auf die eingesetzten Monomeren, 2 % des Schutzkolloids 1 gelöst enthält. Die Lösung des Schutzkolloids wird erwärmt und der Druck soweit reduziert, daß die Reaktionsmischung bei der in den Beispielen jeweils angegebenen Polymerisationstemperatur am Rückfluß siedet. Man polymerisiert 2 Stunden und entwässert anschließend azeotrop. Man filtriert und trocknet den Rückstand im Vakuumtrockenschrank und erhält ein feinteiliges, pulverförmiges Polymerisat, das aus einer Agglomeration

von kugelförmigen Primärpartikeln besteht.

Beispiel 27

In 170 ml Wasser werden 0,52 mol 2-Acrylamido-2-methylpropansulfonsäure vorgelegt und durch Zugabe von 50 %iger wäßriger Natronlauge vollständig neutralisiert. Danach gibt man 240 g einer 50 %igen wäßrigen Acrylamidlösung, 6 g Ameisensäure sowie 52 mg des Pentanatriumsalzes der Diethylentriaminpentaessigsäure zu. Nach Zusatz von 0,15 mol-% Kaliumperoxidisulfat wird das Reaktionsgemisch bei 60 ° C polymerisiert. Man erhält ein Polymerisat mit einem K-Wert von 86. Es besteht aus einer Agglomeration von Primärpartikeln mit einer mittleren Teilchengröße von etwa 5 µm.

Beispiel 28

Man legt 250 mmol Schwefelsäure in 189 g Wasser vor, fügt unter Kühlung 500 mmol Dimethylaminoethylacrylat zu und versetzt dann mit 332 g einer 50 %igen wäßrigen Acrylamidlösung, 2,9 g Ameisensäure und 108 mg des Pentanatriumsalzes der Diethylentriaminpentaessigsäure. Man fügt 0,06 mol-% 2,2'-Azobis(2-amidinopropan)dihydrochlorid zu und polymerisiert bei 60 ° C. Man erhält ein feinteiliges, pulverförmiges und gut wasserlösliches Polymerisat, das aus einer Agglomeration von Primärpartikeln mit einer mittleren Teilchengröße von kleiner als 3 µm besteht und einem K-Wert von 151,1 aufweist. Das kationische Polyacrylamid ist als Flockungsmittel für die Entwässerung kommunaler Klärschlämme geeignet.

Beispiel 29

Die wäßrige Phase besteht aus einer Mischung von 178 g Wasser, 322 g 50 %iger wäßriger Acrylamidlösung, 83,5 g Diethylaminoethylacrylat, 55,6 g 32 %iger wäßriger Salzsäure, 48 mg Pentanatriumsalz der Diethylentriaminpentaessigsäure und 0,58 g Ameisensäure. Die Polymerisation wird mit 0,06 mol-% 2,2'-Azobis(2-aminopropan)dihydrochlorid bei 60 ° C durchgeführt. Das Polymerisat hat einen K-Wert von 123,8 und fällt in Form von lockeren Agglomeraten aus Primärpartikeln mit einer mittleren Teilchengröße von weniger als 4 µm an. Das Polymerisat wird als Verfestigungsmittel für Papier verwendet.

Beispiel 30

Die wäßrige Phase besteht aus einer Mischung von 322 g Wasser, 192 g Acrylamid, 21 g Ameisensäure, 70 mg des Pentanatriumsalzes der Diethylentriaminpentaessigsäure und 48 g Dimethylaminoethylacrylat-Methochlorid. Als Iniitiator wurden 0,09 mol-% 2,2'-Azobis(2-amidinopropan)dihydrochlorideingesetzt. Die Polymerisation wurde bei 70 ° C durchgeführt. Man erhielt ein feinteiliges beim Eintragen in Wasser sich rasch auflösendes Polymerisat mit einem K-Wert von 124,6. Das Polymerisat eignet sich als Flockungsmittel für Klärschlämme.

Aufarbeitung handelsüblicher Wasser-in-Öl-Polymeremulsionen

Allgemeine Vorschrift für die Isolierung pulverförmiger Polymerisate aus Wasser-in-Öl-Emulsionen

Die im folgenden angegebenen Mengen von Wasser-in-Öl-Polymeremulsionen von wasserlöslichen oder wasserquellbaren Polymerisaten wird in eine Vorlage aus 800 ml Cyclohexan und 3 Gew.-%, bezogen auf den Polymergehalt der Wasser-in-Öl-Emulsion, eines in den Beispielen jeweils angegebenen Schutzkolloids eingerührt, erwärmt und azeotrop entwässert. Nach der Entwässerung wird das pulverförmige Polymerisat durch Filtrieren und anschließendes Trocknen im Vakuumtrockenschrank gewonnen.

Beispiel 31

380 g des handelsüblichen Wasser-in-Öl-Polymeremulsion des Typs LUTEXAL HP mit einem Polymergehalt von 22,5 Gew.-% wird in der oben angegebenen Weise unter Verwendung des Schutzkolloids 1 behandelt. Während die nichtbehandelte Wasser-in-Öl-Polymeremulsion unverändert durch das Filter läuft, kann das Polymerisat aus der erfindungsgemäß behandelten Wasser-in-Öl-Polymeremulsion abfiltriert werden.

Die Wasser-in-Öl-Emulsion des Typs LUTEXAL HP ist ein synthetisches Verdickungsmittel für den Textildruck. Die verdickende Wirkung des nach dem erfindungsgemäßen Verfahren isolierten pulverförmigen Polymerisats ist, bezogen auf den Polymergehalt, mit der verdickenden Wirkung der Wasser-in-Öl-Polymeremulsion identisch, d.h. die Wirksamkeit der Polymerisate bleibt voll erhalten.

Beispiel 32

350 g einer handelsüblichen Wasser-in-Öl-Emulsion vom Typ LUTEXAL HEF mit einem Polymergehalt von 25 Gew.-% wird in Gegenwart von Schutzkolloid 2 azeotrop entwässert. Die entwässerte Polymersuspension kann innerhalb einer Stunde filtriert wird. Nach dem Trocknen des Rückstands im Vakuum erhält man eine Agglomeration eines feinteiligen Pulvers, das als Verdickungsmittel, bezogen auf den Polymergehalt, die gleiche Wirkung besitzt wie die Wasser-in-Öl-Polymeremulsion.

Eine Isolierung des Polymerisats durch Filtration der handelsüblichen Wasser-in-Öl-Emulsion ist nicht möglich, weil die Emulsion unverändert durch das Filter läuft.

Beispiel 33

180 g einer handelsüblichen Wasser-in-Öl-Emulsion des Typs ALKOPRINT PTG mit einem Polymergehalt von 38 Gew.-% wird in Gegenwart des Schutzkolloids 1 azeotrop bei 73 bis 80 °C entwässert. Aus der entwässerten Emulsion gelingt es, das Polymerisat unter Verwendung eines Papierfilters abzufiltrieren, während die unbehandelte Wasser-in-Öl-Emulsion unter den gleichen Bedingungen innerhalb weniger Sekunden durch das Filter läuft, ohne einen Rückstand auf dem Filter zu bilden.

Ein Vergleich der Wirksamkeiten beim Einsatz als Verdickungsmittel für den Pigmentdruck ergibt, bezogen auf den Polymergehalt, keinen Unterschied zwischen dem aus der Emulsion gewonnenen pulverförmigen Polymerisat und der handelsüblichen unbehandelten Wasser-in-Öl-Emulsion.

Beispiel 34

350 g einer handelsüblichen Wasser-in-Öl-Emulsion eines kationischen Polyacrylamids vom Typ POLYMIN KE 20 mit einem Polymergehalt von 35 Gew.-% wird in Gegenwart des Schutzkolloids 1 bei 73 bis 80 °C azeotrop entwässert. Durch 5minütige Filtration unter Verwendung eines Papierfilters und anschließende Trocknung des Rückstands im Vakuumtrockenschrank läßt sich das Polymerisat vollständig isolieren. Die unbehandelte Wasser-in-Öl-Emulsion läuft dagegen innerhalb weniger Sekunden ohne jegliche Trennung durch das verwendete Filter. Die Prüfung der Retentions- und Entwässerungswirkung bei der Papierherstellung ergibt, bezogen auf das jeweils eingesetzte Polymerisat, keinerlei Unterschiede zwischen dem erfindungsgemäß gewonnenen pulverförmigen Polymerisat und der unbehandelten handelsüblichen Wasser-in-Öl-Emulsion.

Beispiel 35

160 g einer handelsüblichen Wasser-in-Öl-Emulsion eines kationischen Polyacrylamids mit einem Wirkstoffgehalt von 40 % werden unter Einsatz des Schutzkolloids 2 bei 75 bis 80 °C azeotrop entwässert. Die entwässerte Polymeremulsion wird über eine Druckfilternutsche filtriert. Man erhält ein pulverförmiges, feinteiliges, gut wasserlösliches Polymerisat, das - bezogen auf den Polymergehalt - in der Prüfung auf Flockungs- und Entwässerungswirkung zu den gleichen Ergebnissen führt wie die unbehandelte Wasser-in-Öl-Polymeremulsion. Die handelsübliche, nicht behandelte Wasser-in-Öl-Emulsion läuft innerhalb weniger Minuten rückstandsfrei durch das verwendete Filter.

Beispiel 36

160 g einer handelsüblichen Wasser-in-Öl-Emulsion eines kationischen wasserlöslichen Polymers vom Typ FLOERGER PUROMAX EM 335 wird in Gegenwart des Schutzkolloids 2 bei einer Temperatur von 75 bis 80 °C azeotrop entwässert. Die Filtration unter Verwendung eines Polypropylenfilters mit einer Maschenweite von 50 µm verläuft glatt innerhalb von 45 Minuten. Aus der unbehandelten Wasser-in-Öl-Polymeremulsion kann mit Hilfe des beschriebenen Filters kein Polymerisat gewonnen werden. Bezogen auf festes Polymerisat, ergeben pulverförmige Polymerisate, die nach der erfindungsgemäßen Behandlung gewonnen wurde, und die handelsübliche Wasser-in-Öl-Polymeremulsion die gleiche Wirksamkeit.

Beispiel 37

160 g einer handelsüblichen Wasser-in-Öl-Emulsion eines anionischen Polyacrylamids vom Typ NALCO 8840 werden in Gegenwart des Schutzkolloids 2 bei maximal 80 °C azeotrop entwässert. Das Polymerisat kann aus der entwässerten Polymeremulsion innerhalb von 4 Minuten abfiltriert werden. Im Gegensatz dazu läuft die handelsübliche Wasser-in-Öl-Polymeremulsion innerhalb weniger Sekunden rückstandsfrei durch das Filter.

Beispiel 38

Man verfährt wie im Beispiel 37 angegeben mit der einzigen Ausnahme, daß man das Schutzkolloid 1 einsetzt. Nach der azeotropen Entwässerung sedimentiert die Suspension, die innerhalb von 3 Minuten filtriert werden kann. Die nichtbehandelte Wasser-in-Öl-Polymeremulsion ist dagegen sedimentationsstabil und läuft rückstandsfrei durch das Filter.

Isolierung pulverförmiger Polymerisate aus Wasser-in-Öl-Polymeremulsionen durch zusätzliche Verwendung eines Agglomerationsmittels

Allgemeine Vorschrift für die Beispiele 39 bis 48

Eine wäßrige Phase aus 350 g Acrylsäure, neutralisiert mit der äquivalenten Menge einer 25 %igen wäßrigen Ammoniaklösung, 35 g Acrylamid, 0,3 g Methylenbisacrylamid, 120 mg Pentanatriumsalz der Diethylentriaminpentaessigsäure, 0,68 g Ameisensäure und 385 ml Wasser werden mit einer organischen Phase aus 375 g Cyclohexan, 30 g des Wasser-in-Öl-Emulgators 1, 35 g des Öl-in-Wasser-Emulgators 1 und 8,1 g des Schutzkolloids 1 versetzt. Nach Zugabe von 1,1 ml in der 15 %igen wäßrigen Lösung von 2,2'-Azobis(2-amidinopropan)dihydrochlorid emulgiert man die Mischung 1 Stunde unter Durchleiten von Stickstoff bei Raumtemperatur vor, erwärmt sie auf 55 °C und polymerisiert sie innerhalb von 2 Stunden bei dieser Temperatur. Nach Zugabe von 9 ml einer 1 %igen wäßrigen Lösung von 2,2'-Azobis(2-amidinopropan)dihydrochlorid wird das Gemisch eine weitere Stunde nachpolymerisiert, mit 1500 ml Cyclohexan versetzt und das Wasser azeotrop abdestilliert. Man erhält auf diese Weise eine feinteilige Polymerisatsuspension, die nicht zum Sedimentieren neigt.

Beispiele 39 bis 43

Der oben beschriebenen sedimentationsstabilen Polymerisatsuspension werden jeweils 100 g entnommen und mit 1 g eines der in Tabelle 1 aufgeführten Lösemittel versetzt. Nach Ablauf der in der Tabelle 1 angegebenen Zeit wird jeweils der Volumenanteil der feststoffreichen unteren Phase (VA), bezogen auf die Ausgangssuspension, bestimmt.

Tabelle 1

| Beispiel | Lösemittel | Versuchszeit [h] | Volumenanteil VA [%] | $E_T$[1)] [kcal/mol][2)] |
|---|---|---|---|---|
| 39 | Ethylenglykoldimethylether | 3<br>16 | 100<br>100 | 38,2 |
| 40 | N-Methylpyrrolidon | 3<br>16 | 83<br>78 | 42,2 |
| 41 | N,N-Dimethylformamid | 3<br>16 | 80<br>75 | 43,8 |
| 42 | Acetonitril | 3<br>16 | 80<br>65 | 46,0 |
| 43 | Dimethylsulfoxid | 3<br>16 | 50<br>35 | 45,0 |

1) $E_T$-Wert bestimmt nach Dimroth und Reichardt
2) 1 kcal/mol = 4,19 kJ/mol

Beispiele 44 bis 48

100 g der entwässerten Suspension werden mit 1 g der in Tabelle 2 jeweils angegebenen Lösemittel versetzt. Die Suspension wird dann 1 Minute bzw. 3 Minuten bei 3000 Upm zentrifugiert und danach der Volumenanteil der feststoffreichen unteren Phase (VA) bestimmt sowie die Trübung des Überstands beurteilt. Versuchsdurchführung und Ergebnisse sind in Tabelle 2 angegeben.

Tabelle 2

| Beispiel | Lösemittel | Versuchszeit [h] | Volumenanteil VA [%] | Überstand |
|---|---|---|---|---|
| 44 | Ethylenglykoldimethylether | 1<br>3 | 100<br>100 | -<br>- |
| 45 | N-Methylpyrrolidon | 1<br>3 | 84<br>53 | trüb<br>trüb |
| 46 | N,N-Dimethylformamid | 1<br>3 | 78<br>38 | trüb<br>trüb |
| 47 | Acetonitril | 1<br>3 | 76<br>38 | klar<br>klar |
| 48 | Dimethylsulfoxid | 1<br>3 | 88<br>26 | schwach trüb<br>schwach trüb |

Allgemeine Vorschrift für die Beispiele 49 bis 59

Zur Herstellung der wäßrigen Phase werden 350 g Acrylsäure mit der äquivalenten Menge an 25 %iger wäßriger Ammoniaklösung neutralisiert und anschließend mit 35 g Acrylamid, 0,3 g Methylenbisacrylamid, 120 mg des Pentanatriumsalzes der Diethylentriaminpentaessigsäure, 0,68 g Ameisensäure und 385 ml Wasser versetzt. Die wäßrige Phase wird anschließend mit einer organischen Phase aus 375 g Cyclohexan, 30 g des Wasser-in-Öl-Emulgators1, 35 g des Öl-in-Wasser-Emulgators 1 und 8,1 g des Schutzkolloids 1 versetzt. Nach Zugabe von 1,1 ml in der 15 %igen wäßrigen Lösung von 2,2′-Azobis(2-amidinopropan)-dihydrochlorid emulgiert man die Mischung 1 Stunde unter Durchleiten von Stickstoff bei Raumtemperatur vor, erwärmt sie auf 55 °C und polymerisiert die Emulsion 2 Stunden bei dieser Temperatur. Nach Zugabe von 9 ml einer 1 %igen wäßrigen Lösung von 2,2′-Azobis(2-amidinopropan)dihydrochlorid wird das Reaktionsgemisch eine weitere Stunde nachpolymerisiert. Dann wird mit 750 ml Cyclohexan versetzt und das Wasser azeotrop abdestilliert. Man erhält eine sedimentationsstabile feinteilige Polymerisatsuspension.

100 g dieser Polymersuspension werden mit 1 g eines in Tabelle 3 jeweils angegebenen Lösemittels versetzt und bei 3000 Upm zentrifugiert. Danach wird jeweils der Volumenanteil der feststoffreichen Phase (VA), bezogen auf die Ausgangssuspension bestimmt, sowie die Trübung des Überstands beurteilt. Die verwendeten Lösemittel sowie die Ergebnisse sind in Tabelle 3 zusammengestellt.

Tabelle 3

| Beispiel | Lösemittel | $E_T$ [kcal/mol] | Versuchszeit [min] | Volumenanteil VA [%] | Trübung[a] Überstand |
|---|---|---|---|---|---|
| 49 | N,N-Dimethylacetamid | 43,8 | 1<br>3 | 100<br>92 | 3 |
| 50 | Sulfolan[b] | 44,0 | 1<br>3 | 77<br>43 | 1 |
| 51 | Dimethylsulfoxid | 45,0 | 1<br>3 | 90<br>38 | 2 |
| 52 | Acetonitril | 46,0 | 1<br>3 | 52<br>38 | 3 |
| 53 | Nitromethan | 46,3 | 1<br>3 | 100<br>38 | 2 |
| 54 | Ethylencarbonat | - | 1<br>3 | 42<br>32 | 1 |
| 55 | Ameisensäure | - | 1<br>3 | 100[c]<br>14 | 4 |
| 56 | Essigsäure | 51,2 | 1<br>3 | 90<br>90 | 4 |
| 57 | Trichloressigsäure | - | 1<br>3 | 38<br>32 | 3 |
| 58 | Triethanolamin | - | 1<br>3 | 95<br>95 | 4 |
| 59 | Propylencarbonat | 46,6 | 1<br>3 | 53<br>40 | 1 |

a) Bewertung der Trübung:
1 klar
2 schwach trüb
3 trüb
4 sehr trüb
b) Tetrahydrothiophen-1,1-dioxid
c) starke Klumpenbildung und Produktschädigung

Beispiel 60

1000 ml der wasserfreien Suspension, die gemäß der allgemeinen Vorschrift für die Beispiele 39 bis 48 erhalten wurde, wurde mit 8 g Dimethylsulfoxid vermischt und nach 2 Stunden in einem Druckfilter über ein Polypropylenfiltergewebe bei einem Überdruck von 2 bar filtriert. Das Filtrat ist weitgehend frei von Trübungen, die Filtration ist nach 65 Minuten beendet.

Bei Zusatz von Dimethylsulfoxid ist die Filtration ist nach 8 Stunden beendet.

Beispiel 61

90 g einer handelsüblichen Wasser-in-Öl-Polymeremulsion des Typs Alcoprint PTG werden mit 400 ml Cyclohexan, das 1,3 g des Schutzkolloids 1 enthält, versetzt und azeotrop entwässert. 180 g der so erhaltenen Polymerisatsuspension wurden mit 1,8 g Dimethylsulfoxid versetzt und 15 Minuten nach Zugabe des Dimethylsulfoxids über ein Papierfilter in eine Drucknutsche filtriert. Das Filtrat war klar, die Filtration war nach 45 Minuten beendet.

Beispiel 62

110 g einer handelsüblichen Wasser-in-Öl-Polymeremulsion des Typs Alcoprint PTF werden mit 450 ml Cyclohexan versetzt, das 2,3 g des Schutzkolloids 1 gelöst enthält und 30 Minuten zum Sieden unter Rückfluß erhitzt. Nach dem Abkühlen gibt man zu der Polymersuspension 7,2 g Acetonitril, läßt die Mischung 30 Minuten absitzen, dekantiert den klaren Überstand ab und filtriert in einer Drucknutsche über ein Papierfilter. Die Filtration ist nach 100 Minuten beendet, das Filtrat ist klar.

Anwendungstechnische Beispiele - Verwendung der Polymerisatpulver als Verdickungsmittel im Textildruck

Beispiel 63

10,5 g des gemäß Beispiel 1 erhaltenen pulverförmigen Polymerisats werden unter Rühren in
857,5 g Wasser (15 °dH) eingestreut. Anschließend rührt man vier Minuten mit einem Schnellrührer bei 10.000 Umdrehungen pro Minute. Man erhält eine klare, hochviskose Paste, in der das Verdickungsmittel vollständig durchgequollen ist. Dann gibt man
100 g eines handelsüblichen Bindemittels auf Basis einer 50 %igen Copolymerisatdispersion aus Butylacrylat, Acrylnitril und N-Methylolmethacrylamid,
5 g eines handelsüblichen Pigmentdruckemulgators auf Basis eines Arylpolyglykolethers,
7 g eines handelsüblichen Weichmachers auf Basis eines Polydimethylsiloxans und
20 g des blauen Pigmentfarbstoffs der Colour Index Nr. 74160 zu und rührt nochmals eine Minute bei 10.000 Umdrehungen pro Minute.

Die erhaltene Druckpaste wird anschließend mit Hilfe einer Flachfilmdruckschablone auf ein Baumwollgewebe gedruckt. Danach wird zwei Minuten bei 100 °C getrocknet und 5 Minuten bei 150 °C mit Heißluft fixiert. Man erhält einen blauen, farbstarken, egalen und konturenscharfen Druck mit weichem Griff und guten Reib-, Wasch- und Trockenreinigungseinheiten.

Beispiel 64

10,8 g des gemäß Beispiel 2 hergestellten pulverförmigen Polymerisats werden unter Rühren in
849,2 g Trinkwasser eingestreut. Nach dreiminütigem Rühren mit einem Schnellrührer bei 8.000 Umdrehungen pro Minute erhält man eine klare, hochviskose Paste, in der das Verdickungsmittel vollständig durchgequollen ist. Dann gibt man
110 g eines handelsüblichen Bindemittels auf Basis einer 50 %igen Copolymerisatdispersion aus Butylacrylat, Acrylnitril und N-Methylolmethacrylamid,
10 g eines handelsüblichen Weichmachers auf Basis eines Polydimethylsiloxans und
20 g des blauen Pigmentfarbstoffs der Colour Index Nr. 74160 zu und rührt nochmals zwei Minuten bei 10.000 Umdrehungen pro Minute.

Die erhaltene Druckpaste wird anschließend mit Hilfe einer Flachfilmdruckmaschine auf ein Baumwollgewebe gedruckt. Danach wird zwei Minuten bei 100 °C getrocknet und anschließend 5 Minuten bei 150 °C fixiert. Man erhält einen blauen, farbstarken, egalen und konturenscharfen Druck mit weichem Griff und guten Reib-, Wasch- und Trockenreinigungsechtheiten.

Beispiel 65

12 g des gemäß Beispiel 3 hergestellten pulverförmigen Polymerisats werden unter Rühren in
844 g Trinkwasser eingestreut. Man rührt vier Minuten mit einem Schnellrührer bei 10.000 Umdrehungen pro Minute und erhält eine klare, homogene Paste, in der das Verdickungsmittel vollständig durchgequollen ist. Dann gibt man
4 g einer 25 %igen wäßrigen Ammoniaklösung,

120 g eines handelsüblichen Bindemittels auf Basis einer 40 %igen Copolymerisatdispersion aus Butylacrylat, Styrol, Acrylsäure und N-Methylolmethacrylamid und
20 g des blauen Pigmentfarbstoffs der Colour Index Nr. 74160 zu und rührt nochmals zwei Minuten bei 8.000 Umdrehungen pro Minute.

Die erhaltene Druckpaste wird anschließend mit Hilfe einer Flachfilmdruckmaschine auf ein Baumwollgewebe gedruckt. Nach zweiminütigem Trocknen bei 120 °C wird 4 Minuten bei 160 °C mit Heißluft fixiert. Man erhält einen blauen, farbstarken, egalen und konturenscharfen Druck mit guten Reib- und Waschechtheiten.

Beispiel 66

8,5 g des gemäß Beispiel 4 hergestellten Polymerisats werden unter Rühren eingestreut in eine Mischung aus
847,5 g Trinkwasser,
4 g einer 25 %igen Ammoniaklösung,
10 g eines handelsüblichen Fixierers auf Basis eines Hexamethoxymethylmelamins und
120 g eines handelsüblichen Bindemittels auf Basis einer 45 %igen Copolymerisatdispersion aus Butylacrylat, Styrol und N-Methylolmethacrylamid. Der Ansatz wird vier Minuten mit einem Schnellrührer bei 10.000 Umdrehungen pro Minute gerührt. Danach gibt man
10 g des roten Pigmentfarbstoffs der Colour Index Nr. 12 485 zu und rührt nochmals eine Minute bei 5.000 Umdrehungen pro Minute.

Die erhaltene Druckpaste wird anschließend mit Hilfe einer Flachfilmdruckschablone auf ein Mischgewebe aus 67 % Polyester und 33 % Baumwolle gedruckt. Dann wird 2 Minuten bei 100 °C getrocknet und 5 Minuten bei 150 °C mit Heißluft fixiert. Man erhält einen blauen, farbstarken, brillantroten Druck mit guter Egalität, scharfen Konturen, weichem Griff und guten Reib-, Wasch- und Trockenreinigungsechtheiten.

Beispiel 67

Beispiel 63 wird mit der Ausnahme wiederholt, daß anstelle des dort angegebenen Verdickungsmittels 10,2 g des gemäß Beispiel 5 enthaltenen Polymerisats eingesetzt werden. Man erhält einen blauen, farbstarken, egalen und konturenscharfen Druck mit weichem Griff und guten Reib-, Wasch- und Trockenreinigungsechtheiten.

Beispiel 68

Beispiel 63 wird mit der Ausnahme wiederholt, daß anstelle des dort angegebenen Verdickungsmittels 10 g des gemäß Beispiel 6 enthaltenen Polymerisats eingesetzt werden. Es resultiert ein farbstarker, egaler und konturenscharfer blauer Druck mit weichem Griff und guten Reib-, Wasch- und Trockenreinigungsechtheiten.

Beispiel 69

Beispiel 64 wird mit der Ausnahme wiederholt, daß anstelle des dort angegebenen Verdickungsmittels 10,3 g des gemäß Beispiel 7 enthaltenen Polymerisats eingesetzt werden. Man erhält einen farbstarken und egalen blauen Druck mit weichem Griff und guten Reib-, Wasch- und Trockenreinigungsechtheiten.

Beispiel 70

Beispiel 64 wird mit der Ausnahme wiederholt, daß anstelle des dort angegebenen Verdickungsmittels 10,6 g des gemäß Beispiel 8 enthaltenen Polymerisats eingesetzt werden. Man erhält einen farbstarken und egalen blauen Druck mit weichem Griff und guten Reib-, Wasch- und Trockenreinigungsechtheiten.

Beispiel 71

9,5 g des gemäß Beispiel 9 hergestellten pulverförmigen Polymerisats werden unter Rühren in
960,5 g Wasser von 15 °dH eingestreut. Anschließend fügt man
30 g des blauen Dispersionsfarbstoffs der Formel

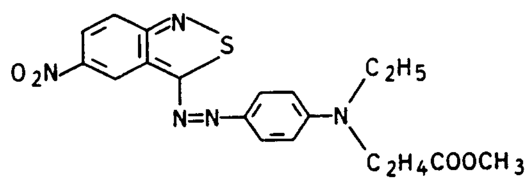

in der flüssigen, nichtionogen gefinishten Handelsform zu und rührt den Ansatz drei Minuten mit einem Schnellrührer bei 10.000 Umdrehungen pro Minute.

Die so erhaltene Druckpaste wird mit Hilfe einer Flachfilmdruckschablone auf eine Polyester-Wirkware gedruckt. Der Druck wird 3 Minuten bei 100 °C getrocknet und 10 Minuten bei 170 °C einer Heißdampffixierung unterworfen. Man erhält einen sehr farbstarken blauen Druck mit guter Egalität, gutem Konturenstand und weichem Griff.

Beispiel 72

28,1 g des gemäß Beispiel 10 hergestellten pulverförmigen Polymerisats werden in
801,9 g destilliertes Wasser unter Rühren eingestreut. Dann wird drei Minuten bei 12.000 Umdrehungen pro Minuten mit einem Schnellrührer homogenisiert. Anschließend fügt man unter Rühren nacheinander
120 g Harnstoff,
25 g Soda,
10 g des Natriumsalzes der m-Nitrobenzolsulfonsäure,
5 g Natriummetaphosphat und
10 g des pulverförmigen blauen Reaktivfarbstoffs der Colour Index Nr. 61 205 zu und homogenisiert 3 Minuten bei 10.000 Umdrehungen pro Minute.

Die erhaltene Druckpaste wird mit einer Flachfilmdruckmaschine auf ein Baumwollgewebe gedruckt. Anschließend trocknet man 2 Minuten bei 110 °C und unterzieht die bedruckte Ware 10 Minuten bei 102 °C einer Sattdampffixierung. Die Ware wird anschließend nacheinander mit Wasser von 20 und Wasser von 60 °C gespült und mit einer Waschflotte, die 2 g/l eines Anlagerungsprodukts von 8 Mol Ethylenoxid an Nonylphenol enthält, gekocht. Nach erneutem Spülen bei 20 °C wird die Ware getrocknet. Man erhält einen sehr farbstarken, egalen, konturenscharfen und weichen blauen Druck.

Beispiel 73

5,4 g des gemäß Beispiel 11 hergestellten pulverförmigen Polymerisats werden unter Rühren in
544,6 g Trinkwasser eingestreut. Der Ansatz beginnt bereits nach wenigen Sekunden zu verdicken. Anschließend wird zwei Minuten mit einem Schnellrührer bei 8.000 Umdrehungen gerührt. In den homogenen, viskosen Ansatz werden unter Rühren bei 8.000 Umdrehungen pro Minute innerhalb einer Minute
300 g Benzin einemulgiert. Dann rührt man nochmals eine Minute bei 10.000 Umdrehungen pro Minute und fügt
120 g eines handelsüblichen Bindemittels auf Basis einer 45%igen wäßrigen Copolymerisatdispersion aus Butadien, Styrol, Acrylnitril und N-Methylolmethacrylamid sowie
30 Teile des roten Pigmentfarbstoffs der Colour Index Nr. 12475 zu. Das Gemisch wird nochmals zwei Minuten bei 10.000 Umdrehnungen pro Minute gerührt.

Die erhaltene Druckpaste wird dann mit Hilfe einer Rouleauxdruckmaschine auf ein Baumwollgewebe gedruckt. Der Druck wird 3 Minuten bei 100 °C getrocknet und 5 Minuten bei 150 °C mit Heißluft fixiert. Man erhält einen brillanten, farbstarken, egalen, konturenscharfen roten Druck mit weichem Griff und guten Reib-, Naß- und Waschechtheiten.

Beispiel 74

34,2 g des gemäß Beispiel 12 hergestellten pulverförmigen, nicht staubenden Polymerisats werden unter Rühren in eine Lösung von
100 g Harnstoff,
25 g Soda,
33,3 g 30 %iger Natronlauge und
1,5 g eines handelsüblichen Anlagerungsprodukts von 10 Mol Ethylenoxid an 1 Mol Isooctylphenol in

781 g destilliertem Wasser eingestreut. Nach dreiminütigem Rühren bei 10.000 Umdrehungen pro Minute gibt man

25 g eines handelsüblichen gelben Reaktivfarbstoffs der Colour Index Nr. 13245 zu und homogenisiert nochmals durch zweiminütiges Rühren bei 5.000 Umdrehungen pro Minute.

Die erhaltene Druckpaste wird mit einer Flachfilmdruckschablone auf ein Zellwollgewebe gedruckt. Anschließend wird 2 Minuten bei 110 °C getrocknet und 8 Minuten bei 102 bis 104 °C mit Sattdampf fixiert. Die Ware wird danach zunächst bei 15 bis 20 °C und danach bei 60 °C gespült und mit einer Waschflotte gekocht, die 2 g/l 50%ige Natronlauge und 2 g/l des Natriumsalzes der Ethylendiamintetraessigsäure enthält. Danach wird mit Wasser von 15 bis 20 °C neutral gespült und anschließend getrocknet. Man erhält einen sehr farbstarken, egalen, konturenscharfen und weichen rotstichig gelben Druck.

Beispiel 75

12,1 g des gemäß Beispiel 13 hergestellten pulverförmigen Polymerisats werden unter Rühren in

952,7 g Trinkwasser eingestreut. Anschließend rührt man mit einem Schnellrührer zwei Minuten bei 10.000 Umdrehungen pro Minute, fügt

5,2 g 50%ige Natronlauge zu und rührt erneut zwei Minuten bei 10.000 Umdrehungen pro Minute. Man erhält eine hochviskose glatte Paste. Dann gibt man

30 g des blauen Dispersionsfarbstoffs der Formel

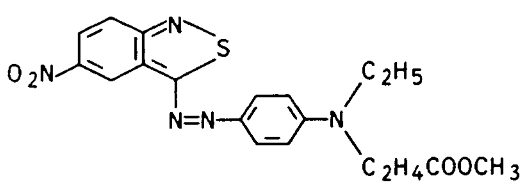

in der flüssigen, nichtionogen gefinishten Handelsform zu und homogenisiert den Ansatz eine Minute bei 10.000 Umdrehungen pro Minute.

Die so erhaltene Druckpaste wird mit Hilfe einer Flachfilmdruckschablone auf ein Polyester-Satingewebe gedruckt. Dann wird 3 Minuten bei 100 °C getrocknet und danach 6 Minuten bei 175 °C mit Heißdampf fixiert. Der so erhaltene Druck wird zunächst mit kaltem Wasser, dann mit Wasser von 60 °C gespült. Anschließend erfolgt bei 60 °C eine reduktive Reinigung mit einer Waschflotte, die 2 g/l 50%ige Natronlauge, 2 g/l Natriumdithionit und 2 g/l eines Netzmittels auf Basis eines Anlagerungsprodukts aus 8 Mol Ethylenoxid an 1 Mol Nonylphenol enthält. Danach wird die Ware mit kaltem Wasser gespült und getrocknet. Man erhält einen sehr farbstarken blauen Druck mit weichem Griff, guter Egalität und gutem Konturenstand.

Beispiel 76

Beispiel 65 wird mit der Ausnahme wiederholt, daß anstelle des dort angegebenen Verdickungsmittels 25,5 g des gemäß Beispiel 14 enthaltenen Polymerisats eingesetzt werden. Es resultiert ein konturenscharfer blauer Druck mit guten Reib- und Waschechtheiten.

Beispiel 77

Beispiel 65 wird mit der Ausnahme wiederholt, daß anstelle des dort angegebenen Verdickungsmittels 17 g des gemäß Beispiel 5 enthaltenen Polymerisats eingesetzt werden. Man erhält einen blauen Druck mit guten Reib- und Waschechtheiten.

Beispiel 78

In einem Kunststoffbecher von 2 l Inhalt werden

851,4 g Trinkwasser vorgelegt. Während das Wasser mit einem von Hand bewegten breiten Kunststoffspatel gerührt wird, streut man langsam

8,6 g des pulverförmigen Polymerisats aus Beispiel 16 ein. Der Ansatz beginnt bereits nach 1 Minute zu verdicken. Dann wird mit dem Spatel weitergerührt; bereits nach 8 Minuten erhält man eine homogene

hochviskose Paste. Anschließend gibt man
120 g eines handelsüblichen Bindemittels auf Basis einer 45%igen Copolymerisatdispersion aus Butylacrylat, Styrol und N-Methylolmethacrylamid und
20 g des blauen Pigmentfarbstoffs der Colour Index Nr. 74160 zu und rührt solange mit dem Spatel, bis der Ansatz homogen und der Farbstoff gleichmäßig verteilt ist. Hierzu werden etwa 2 bis 3 Minuten benötigt.

Die erhaltene Druckpaste wird schließlich mit Hilfe einer Flachfilmdruckschablone auf ein Baumwollgewebe gedruckt. Es wird 2 Minuten bei 100 °C getrocknet und danach 5 Minuten bei 140 °C mit Heißluft fixiert. Man erhält einen blauen Druck mit weichem Griff und guten Reib-, Wasch- und Trockenreinigungsechtheiten.

Beispiel 79

Beispiel 66 wird mit der Ausnahme wiederholt, daß anstelle des dort angegebenen Verdickunsmittels 11,5 g des gemäß Beispiel 17 erhaltenen Polymerisats eingesetzt werden. Man erhält einen brillantroten Druck mit guten Reib-, Wasch- und Trockenreinigungsechtheiten.

Beispiel 80

Beispiel 78 wird wiederholt mit der Ausnahme, daß anstelle des dort angegebenen Verdickungsmittels dieselbe Menge des gemäß Beispiel 18 erhaltenen Polymerisats eingesetzt wird. Man erhält einen blauen Druck, der hinsichtlich Farbstärke, Egalität, Konturenschärfe, Griff und Echtheiten dem nach Beispiel 78 hergestellten Druck entspricht.

Beispiel 81

Beispiel 66 wird mit der Ausnahme wiederholt, daß anstelle des dort angegebenen Verdickungsmittels 15 g des gemäß Beispiel 19 hergestellten Polymerisats eingesetzt werden. Es resultiert ein brillantroter Druck mit weichem Griff und guten Reib-, Wasch- und Trockenreinigungsechtheiten.

Beispiel 82

Beispiel 63 wird mit der Ausnahme wiederholt, daß anstelle des dort verwendeten Verdickungsmittels 9,9 Teile des gemäß Beispiel 31 hergestellten Polymerisats eingesetzt werden. Man erhält einen blauen Druck, der hinsichtlich Farbstärke, Egalität, Konturenschärfe, Griff und Echtheiten mit dem Druck übereinstimmt, der bei Verwendung einer entsprechenden Menge an Polymer in Form der handelsüblichen Wasser-in-Öl-Polymeremulsion als Verdickungsmittel erreicht wird.

Beispiel 83

Beispiel 63 wird wiederholt mit der Ausnahme, daß anstelle des dort verwendeteten Verdickungsmittels 10 Teile des gemäß Beispiel 32 hergestellten Polymerisats eingesetzt werden. Man erhält blauen Druck, der hinsichtlich Farbstärke, Egalität, Konturenschärfe, Griff und Echtheiten mit dem Druck übereinstimmt, der bei Verwendung derselben Polymerisatmenge in Form der handelsüblichen Wasser-in-Öl-Polymeremulsion erzielt wird.

Beispiel 84

Beispiel 63 wird mit der Ausnahme wiederholt, daß anstelle des dort verwendeten Verdickungsmittels 12,9 g des gemäß Beispiel 33 hergestellten pulverförmigen Polymerisats zusammen mit 5 g 25%iger wäßriger Ammoniaklösung eingesetzt werden. Man erhält einen blauen Druck, der hinsichtlich Farbstärke, Egalität, Konturenschärfe, Griff und Echtheiten mit dem Druck übereinstimmt, der bei Verwendung derselben Menge an Polymerisat in Form der handelsüblichen Wasser-in-Öl-Polymeremulsion erhältlich ist.

**Patentansprüche**

1. Verfahren zur Herstellung von feinteiligen Polymerisatpulvern durch Polymerisieren von wasserlöslichen Monomeren in der wäßrigen Phase einer Wasser-in-Öl-Emulsion in Gegenwart von Wasser-in-Öl-Emulgatoren und von Radikale bildenden Polymerisationsinitiatorenund Isolieren der Polymerisate,

dadurch gekennzeichnet, daß man die Polymerisation der wasserlöslichen Monomeren in Gegenwart von 0,1 bis 10 Gew.-%, bezogen auf die bei der Polymerisation eingesetzten Monomeren, an Schutzkolloiden durchführt oder die Schutzkolloide nach Beendigung der Polymerisation der Wasser-in-Öl-Polmerisation in Mengen von 0,1 bis 10 Gew.-%, bezogen auf Polymer, zusetzt, wobei die Wasser-in-Öl-Emulgatoren einer anderen Verbindungsklasse angehören als die Schutzkolloide, die entstandene Wasser-in-Öl-polymersuspension azeotrop entwässert und die suspendierten feinteiligen Polymerisatpulver isoliert.

2. Verfahren nach Anspruch 1, dadurch gekennzeichnet, daß man die Polymerisation der wasserlöslichen Monomeren zusätzlich in Gegenwart von 1 bis 20 Gew.-%, bezogen auf die bei der Polymerisation eingesetzten Monomeren, mindestens eines Öl-in-Wasser-Emulgators durchführt.

3. Verfahren nach Anspruch 1, dadurch gekennzeichnet, daß man als Schutzkolloide Sorbitanester oder Polymerisate einsetzt, die üblicherweise bei der umgekehrten Suspensionspolymerisation angewendet werden.

4. Verfahren nach einem der Ansprüche 1 bis 3, dadurch gekennzeichnet, daß man die wasserlöslichen Monomeren in Gegenwart von 50 bis 5000 ppm mindestens eines Vernetzers polymerisiert.

5. Verfahren nach einem der Ansprüche 1 bis 4, dadurch gekennzeichnet, daß man die Wasser-in-Öl-Polymeremulsion zusätzlich in Gegenwart von 0,5 bis 10 Gew.-%, bezogen auf die gesamte Polymeremulsion, eines polaren organischen Lösemittels als Agglomerationsmittel azeotrop entwässert oder das Agglomerationsmittel der entwässerten Polymersuspension zusetzt.

6. Verwendung der nach Anspruch 4 erhältlichen Polymerisate als Verdickungsmittel für wäßrige Systeme.

7. Verwendung der nach Anspruch 1 oder 2 erhältlichen wasserlöslichen Polymerisate als Flockungsmittel.

## Claims

1. A process for the preparation of a finely divided polymer powder by polymerizing water-soluble monomers in the aqueous phase of a water-in-oil emulsion in the presence of water-in-oil emulsifiers and free-radical polymerization initiators and isolating the polymers, which comprises carrying out the polymerization of the water-soluble monomers in the presence of from 0.1 to 10% by weight, based on the monomers employed in the polymerization, of protective colloids or adding the protective colloids to the water-in-oil emulsion in an amount of from 0.1 to 10% by weight, based on the polymer, after the polymerization is complete the water-in-oil emulsifiers belonging to a different class of compounds than the protective colloids, removing the water from the resultant water-in-oil polymer suspension by azeotropic distillation, and isolating the suspended finely divided polymer powder.

2. A process as claimed in claim 1, wherein the polymerization of the water-soluble monomers is additionally carried out in the presence of from 1 to 20% by weight, based on the monomers employed in the polymerization, of at least one oil-in-water emulsifier.

3. A process as claimed in claim 1, wherein the protective colloids employed are sorbitan esters or polymers usually employed in reverse suspension polymerization.

4. A process as claimed in claim 1 or 2 or 3, wherein the water-soluble monomers are polymerized in the presence of from 50 to 5,000 ppm of at least one crosslinking agent.

5. A process as claimed in claim 1 or 2 or 3 or 4, wherein the removal of the water from the water-in-oil polymer emulsion by azeotropic distillation is additionally carried out in the presence of from 0.5 to 10% by weight, based on the total polymer emulsion, of a polar organic solvent as agglomeration aid, or the agglomeration aid is added to the polymer suspension after removal of the water.

6. The use of a polymer obtainable as claimed in claim 4 as a thickener for aqueous systems.

7. The use of a water-soluble polymer obtainable as claimed in claim 1 or 2 as a flocculant.

**Revendications**

1. Procédé de préparation de poudres de polymère en fines particules, par polymérisation de monomères hydrosolubles dans la phase aqueuse d'une émulsion eau-dans-huile en présence d'émulsifiants eau-dans-huile et d'amorceurs radicalaires de polymérisation et par isolement des produits de polymérisation, caractérisé en ce que l'on mène la polymérisation des monomères hydrosolubles en présence de 0,1 à 10% en poids de colloïdes protecteurs par rapport aux monomères mis en réaction de polymérisation ou on ajoute les colloïdes protecteurs, après l'achèvement de la polymérisation, à l'émulsion de polymère eau-dans-huile dans des proportions de 0,1 à 10% en poids par rapport au polymère, les émulsifiants eau-dans-huile appartenant à une classe de composés différente de celle des colloïdes protecteurs, on déshydrate par voie azéotropique la suspension de polymère eau-dans-huile formée et on isole la poudre de polymère en fines particules contenue en suspension.

2. Procédé selon la revendication 1, caractérisé en ce que l'on mène en plus la polymérisation des monomères hydrosolubles en présence de 1 à 20% en poids d'au moins un émulsifiant huile-dans-eau, par rapport aux monomères mis en réaction de polymérisation.

3. Procédé selon la revendication 1, caractérisé en ce que l'on utilise, comme colloïdes protecteurs, des esters de sorbitanne ou des polymères qui sont utilisés ordinairement dans la polymérisation en suspension inverse.

4. Procédé selon l'une quelconque des revendications 1 à 3, caractérisé en ce que l'on polymérise les monomères hydrosolubles en présence de 50 à 5000 ppm d'au moins un réticulant.

5. Procédé selon l'une quelconque des revendications 1 à 4, caractérisé en ce que l'on déshydrate en plus l'émulsion de polymère eau-dans-huile par voie azéotropique en présence de 0,5 à 10% en poids, par rapport à l'émulsion de polymère totale, d'un solvant organique polaire servant d'agent d'agglomération, ou on ajoute l'agent d'agglomération à la suspension de polymère déshydratée.

6. Utilisation des polymères obtenus selon la revendication 4 comme épaississants pour des systèmes aqueux.

7. Utilisation des polymères hydrosolubles obtenus selon la revendication 1 ou 2 comme agents de floculation.